(19) Europäisches Patentamt
European Patent Office
Office européen des brevets

(11) **EP 3 360 993 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **18155958.4**

(22) Anmeldetag: **09.02.2018**

(51) Int Cl.:
*D04H 1/425* (2012.01)   *A01K 1/015* (2006.01)
*A47G 27/02* (2006.01)   *A47L 23/22* (2006.01)
*B60N 3/04* (2006.01)   *D04H 1/4382* (2012.01)
*D04H 1/66* (2012.01)   *D06N 7/00* (2006.01)
*A01K 1/035* (2006.01)   *A47B 96/00* (2006.01)
*A47B 97/00* (2006.01)   *A47G 23/03* (2006.01)
*A47L 23/26* (2006.01)   *D06M 15/227* (2006.01)
*D06M 15/333* (2006.01)   *D06M 15/564* (2006.01)
*D06M 15/59* (2006.01)   *D06M 23/16* (2006.01)
*D06M 15/693* (2006.01)

(54) **WEGWERFBARE ABSORBIERENDE FLÄCHENSCHUTZMATTE**

DISPOSABLE ABSORBENT SURFACE PROTECTION MAT

TAPIS DE PROTECTION DE SURFACE ABSORBANT JETABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2017 DE 102017102866**

(43) Veröffentlichungstag der Anmeldung:
**15.08.2018 Patentblatt 2018/33**

(73) Patentinhaber: **CMC Consumer Medical Care GmbH**
**89567 Sontheim an der Brenz (DE)**

(72) Erfinder:
• **MANGOLD, Rainer**
**89542 Herbrechtingen (DE)**
• **RÖMPP, Angela**
**73105 Dürnau (DE)**
• **MEYER, Mareike**
**48599 Gronau (DE)**

(74) Vertreter: **Decker, Gabriele Theresia et al**
**Paul Hartmann AG**
**Patents & Licensing**
**Paul-Hartmann-Straße 12**
**DE-89522 Heidenheim (DE)**

(56) Entgegenhaltungen:
EP-A1- 2 602 385      EP-A2- 0 188 005
WO-A1-03/087448      WO-A1-2017/029146
US-A1- 2007 020 433      US-A1- 2008 124 533

## Beschreibung

Die vorliegende Erfindung betrifft eine wegwerfbare absorbierende Flächenschutzmatte aus einem Vliesmaterial mit einer Unterseite und einer Oberseite, wobei das Vliesmaterial eine absorbierende Basislage umfasst und die Basislage ein Fasermaterial aus Stapelfasern aufweist.

Absorbierende Flächenschutzmatten sind im Stand der Technik bekannt.

So ist z.B. in der US 7,501,364 eine absorbierende Matte aus einem vernadelten und Wärmekalander verfestigten Stapelfaservlies umfassend Baumwoll-, Polyolefin- und Polyesterfasern beschrieben.

Weiter ist aus der DE 20 2004 007 129 U1 eine absorbierende Unterlage aus einem Faservlies umfassend Bikomponentenfasern bekannt, deren äußeren Schichten eine unterschiedliche Porosität und Steifigkeit aufweisen.

Absorbierende Matten, bei denen eine flüssigkeitsundurchlässige Folienlage vorgesehen ist, sind z.B. in der US 4,609,580 und US 5,834,104 beschrieben.

Der vorliegenden Erfindung liegt die Aufgabe zu Grunde, eine wegwerfbare absorbierende Flächenschutzmatte bereitzustellen, welche absorbierende Eigenschaften aufweist, in der Weise, dass ein guter Flüssigkeitstransport und Flüssigkeitsrückhalt bei gleichzeitig weitgehendem Erhalt der dem Vliesmaterial der Flächenschutzmatte zueignen und erwünschten Eigenschaften, wie beispielsweise Luftdurchlässigkeit und Stabilität möglich ist und zudem der Flächenschutzmatte mehr Sicherheit in ihrer Anwendung verleiht.

Die Aufgabe wird gelöst durch eine wegwerfbare absorbierende Flächenschutzmatte mit den Merkmalen des Anspruchs 1, wobei die Stapelfasern

a.) absorbierende cellulosische Fasern und/oder hydrophile synthetische Fasern und
b.) Schmelzbindefasern, insbesondere Bi- oder Mehrkomponentenfasern umfassen

und wobei die Unterseite des Vliesmaterials mit einer bereichsweisen, nicht vollflächigen Beschichtung versehen ist, wobei die Beschichtung eine Höhe von mindestens 0,1 mm aufweist.

Es wurde erkannt, dass ein Fasermaterial aus Stapelfasern, das Schmelzbindefasern umfasst, eine partielle Verbindung der Stapelfasern ermöglicht, so dass Kavitäten, also Zwischenräume gebildet werden und damit eine gewisse Kanalstruktur und Kompartimentierungsstruktur innerhalb des Fasermaterials erzielt wird. Damit kann der Transfer von Flüssigkeit von der Außenseite des Vliesmaterials, damit auch von der zu bedeckenden Fläche weg in die Flächenschutzmatte verbessert werden. Zudem tragen die Schmelzbindefasern vorteilhaft zu einer punktförmigen oder partiellen Verfestigung der Faserstruktur bei, so dass das Vliesmaterial auch eine bessere Abriebfestigkeit zeigt.

In der Kombination mit absorbierenden cellulosischen Fasern und/oder hydrophilen synthetischen Fasern können die Flüssigkeitsanziehung und -bindungseigenschaften des Vliesmaterials eingestellt werden. Dies trägt insgesamt vorteilhaft zu einem trockenen Erscheinungsbild der Oberflächen der Flächenschutzmatte bei.

Eine vollflächige Foliensperrschicht, insbesondere an der Unterseite an einer Flächenschutzmatte mag zwar einerseits einen direkten Flüssigkeitsdurchtritt auf die damit abzudeckende Fläche unterbinden, jedoch ist die vollständige Abdichtung auch nachteilig, da die abzudeckende Fläche als solche keinerlei Austausch mit dem Umgebungsklima mehr erfährt, sondern sich unterhalb der Foliensperrschicht vielmehr eine nicht atmungsaktive Zwischenschicht einstellen kann, was zu einem klammen, nicht vorteilhaftem Mikroklima über der abzudeckenden Fläche führen kann.

Es wurde weiter erkannt, dass für eine wegwerfbare absorbierende Flächenschutzmatte, die insbesondere darauf ausgelegt ist, kontinuierliche, überschaubare Flüssigkeitseinträge aufzunehmen, also keine schwallartigen Flüssigkeitsansammlungen, eine Foliensperrschicht, insbesondere an der Unterseite, nicht notwendig ist.

Die erfindungsgemäße Flächenschutzmatte aus einem Vliesmaterial besteht ausschließlich aus einem Vliesmaterial, das heißt, es ist weder innerhalb des Vliesmaterials noch an der Oberseite oder Unterseite des Vliesmaterials eine Foliensperrschicht angeordnet, fixiert oder laminiert. Das heißt, die Flächenschutzmatte ist frei von einer, insbesondere vollflächigen, Foliensperrschicht.

Durch den Verzicht auf eine Foliensperrschicht können Material und damit an Kosten gespart werden.

Dadurch, dass die Beschichtung dem Vliesmaterial gegenüber erhaben ausgebildet ist, und zwar mit einer Höhe von mindestens 0,1 mm, kann ein Abstandshalter zwischen dem Flüssigkeit aufnehmenden Vliesmaterial und der abzudeckenden Fläche geschaffen werden.

Durch den Verzicht einer Foliensperrschicht und einer partiellen, nur bereichsweisen Beschichtung ist vorteilhaft ein Luftzutritt zur Unterseite des Vliesmaterials möglich und damit auch ein Luftdurchtritt durch Unterseite und Oberseite des Vliesmaterials. Damit ergibt sich die Möglichkeit des Abtrocknens des Vliesmaterials bzw. der Flächenschutzmatte und damit resultiert ein positives Mikroklima zwischen Flächenschutzmatte und abzudeckender Fläche.

Es wurde ebenso erkannt, dass durch die Ausführung der partiellen, bereichsweisen, nicht vollflächigen Beschichtung auf der Unterseite des Vliesmaterials dem Vliesmaterial eine Rutschfestigkeit verliehen werden kann.

Unter einer wegwerfbaren absorbierenden Flächenschutzmatte im Sinne der Erfindung wird eine Abdeckung für Flächen von Mobiliar, Einrichtungs- und Ausstattungsgegenstände, so beispielsweise im Haushalt, im Büro, im Hotel, im Auto, insbesondere zur Möbelabdeckung, beispielsweise als Schrankboden- und/oder Schubladenbodeneinlage, als Unterlage für Haushaltswaren, wie Geschirr und Gläser, zur Flächen-, Fußboden- oder Teppichabdeckung, beispielsweise als Fußmatte, als Abstreifmatte, als Tierunterlage/Tierplatzmatte, als "Malervlies" verstanden.

Eine wegwerfbare absorbierende Flächenschutzmatte im Sinne der Erfindung ist ausdrücklich keine Abdeckung für einen persönlichen Bekleidungsartikel, insbesondere keine Abdeckung innerhalb eines persönlichen Bekleidungsartikels, insbesondere keine Einlegesohle für Schuhe.

Mithin wird die wegwerfbare absorbierende Flächenschutzmatte vorteilhaft verwendet als Abdeckung für Flächen, wie eine Fußbodenabdeckung, als eine Teppichbodenabdeckung, insbesondere als eine Fußmatte, als eine Schmutzfang-Abstreifmatte, als eine Tierunterlage oder eine Tierplatzmatte, oder als eine Abdeckung für Flächen von Mobiliar, Einrichtungs- und Ausstattungsgegenständen, wie insbesondere als eine Unterlage für Haushaltswaren, wie Geschirr und /oder Gläser, als ein Tischplatzset oder als eine Schrankboden- und Schubladenbodeneinlage oder als "Malervlies".

Ein Fasermaterial aus Stapelfasern wird hierbei verstanden als eine Faseranhäufung von trocken abgelegten Stapelfasern, also von Fasern mit einer endlichen oder definierten, vorzugsweise geschnittenen Länge. Stapelfasern können dabei Naturfasern, wie beispielsweise Baumwolle, Zellstoff, Fluffpulp, Hanf, oder synthetische Stapelfasern mit definierter oder geschnittener Länge basierend auf Naturfasern, wie beispielsweise Viskose, oder basierend auf Polymeren, wie beispielsweise Polyolefinen, Polyamiden, Polyestern oder Kombinationen aus Polymeren sein. Das Fasermaterial der Basislage enthält somit keine Meltblown-Faservliese oder Spundbond-Faservliese. Das Fasermaterial aus Stapelfasern kann dabei gleichwohl neben den a) absorbierenden cellulosischen Fasern und/oder hydrophilen synthetischen Fasern und b) Schmelzbindefasern weitere Stapelfasern umfassen. Weiterhin kann die Basislage weitere Komponenten, wie beispielsweise superabsorbierende Komponenten, Wirkstoffe oder geruchsbindende Stoffe oder Duftstoffe, insbesondere mikroverkapselte Parfümöle aufweisen.

Das Fasermaterial aus Stapelfasern kann nach dem Vliesbildungsverfahren weiteren fachüblichen Weiterbearbeitungsmaßnahmen, wie Kardieren und/oder Verfestigen, wie beispielsweise Kalandrieren oder Thermofixierung unterworfen werden.

Schmelzbindefasern sind dem Fachmann als synthetische Fasern bekannt, die durch Einfluss von Wärme in einen aufgeweichten und fließfähigen Zustand gebracht werden können, was eine partielle Einbettung der anderen Stapelfasern oder sonstigen Komponenten ermöglicht.

Schmelzbindefasern können als Vollprofilfaser oder als Bikomponentenfaser oder Mehrkomponentenfaser ausgeführt sein. Mit Vollprofilfasern können eher grobe Bindungsnetzwerke mit den anderen Stapelfasern geschaffen werden, hingegen können mit Bi- oder Mehrkomponentenfasern vorteilhaft mehr und kleinere Klebepunkte und damit ein stabiles dreidimensionales Netzwerk gebildet werden.

Insbesondere bevorzugt sind die erfindungsgemäß eingesetzten Schmelzbindefasern als Bikomponentenfasern oder Mehrkomponentenfasern ausgeführt.

Mehrkomponentenfasern, insbesondere Bikomponentenfasern sind dem Fachmann als synthetische Fasern bekannt, die aus mindestens zwei Polymeren oder einer Mischung von Polymer und Copolymer unterschiedlicher physikalischer oder chemischer Eigenschaft bestehen. Auch Vollprofilfasern zeichnen sich durch Mischung von Polymeren und Copolymeren aus.

Die mindestens zwei Polymere bzw. die mindestens zwei Komponenten einer Mehrkomponentenfaser, insbesondere einer Bikomponentenfaser können innerhalb der Faser unterschiedlich angeordnet sein, wie beispielsweise nebeneinander oder insbesondere in einer Mantel-Kern-Anordnung.

Im Falle von bevorzugt eingesetzten Bi- oder Mehrkomponentenfasern weisen diese vorzugsweise eine niedrig schmelzende Komponente und eine höher schmelzende Komponente auf, vorzugsweise in einer Mantel-Kern-Anordnung, wobei dann im Falle einer Mantel-Kern-Anordnung der Mantel die niedrig schmelzende Komponente beinhaltet.

Als Polymermaterialien für die Schmelzbindefasern, insbesondere Vollprofilfasern oder Bi-oder Mehrkomponentenfasern sind Polyester (PES), Polyolefinen, insbesondere PP, PE, und/oder Polyamide oder Kombinationen daraus denkbar.

Insbesondere bevorzugt werden Bi- oder Mehrkomponentenfasern auf Polyesterbasis eingesetzt. Solchen Falls weisen die insbesondere bevorzugten Polyester-Bikomponentenfasern eine niedrig schmelzende Komponente aus Copolyester und eine höher schmelzende Komponente aus Polyester auf. In diesem Fall weisen die Polyester-Bikomponentenfasern bevorzugt einen Kern aus Polyester (PES) und einen Mantel aus Copolyester auf.

Dabei sollen die Schmelzbindefasern, insbesondere die Bi- oder Mehrkomponentenfasern vorzugsweise mit einem Gewichtsanteil von mindestens 10 Gew-%, vorzugsweise von mindestens 15 Gew-%, vorzugsweise von mindestens 20 Gew-%, weiter vorzugsweise von mindestens 30 Gew-%, weiter vorzugsweise von mindestens 40 Gew-% bezogen auf das Gesamtgewicht des Fasermaterials der Basislage vorgesehen sein. Weiter vorzugsweise weisen die Schmelzbindefasern, insbesondere die Bi- oder Mehrkomponentenfasern einen Gewichtsanteil am Gesamtgewicht der Basislage von höchstens 60 Gew-%, vorzugsweise von höchstens 55 Gew-%, weiter vorzugsweise von höchstens 50 Gew-% auf.

In einer bevorzugten Ausführung des Vliesmaterials mit zusätzlich einer, zwei oder mehreren weiteren Vlieslagen, so sind vorzugsweise auch in zumindest einer oder zwei oder in mehreren weiteren Vlieslagen Schmelzbindefasern, insbesondere Bi-oder Mehrkomponentenfasern vorgesehen. Dabei sind insbesondere zumindest in einer oder zwei oder in mehreren weiteren Vlieslagen Schmelzbindefasern, insbesondere Bi- oder Mehrkomponentenfasern vorzugsweise mit einem Gewichtsanteil von mindestens 10 Gew-%, vorzugsweise von mindestens 15 Gew-%, vorzugsweise von mindestens 20 Gew-%, weiter vorzugsweise von mindestens 30 Gew-%, weiter vorzugsweise von mindestens 40 Gew-% bezogen auf das Gesamtgewicht des Fasermaterials der jeweiligen weiteren Vlieslage vorgesehen. Weiter vorzugsweise sollen die Schmelzbindefasern, insbesondere Bi- oder Mehrkomponentenfasern mit einem Gewichtsanteil am Gesamtgewicht des Fasermaterials der jeweiligen weiteren Vlieslage von höchstens 60 Gew-%, vorzugsweise von höchstens 55 Gew-%, weiter vorzugsweise von höchstens 50 Gew-% vorhanden sein.

Im Falle, dass die absorbierende Basislage und/oder eine weitere Vlieslage hydrophile synthetische Fasern aufweist, weisen die hydrophilen synthetischen Fasern vorzugsweise eine im Vergleich zur Schmelzbindefaser, insbesondere zur niedrig schmelzenden Komponente der Bi- oder Mehrkomponentenfasern, höhere Schmelztemperatur auf. Hierdurch wird sichergestellt, dass bei thermischer Verfestigung die hydrophilen synthetischen Fasern selbst nicht erweichen oder erschmelzen.

In vorteilhafter Weise beträgt die Faserstärke der Schmelzbindefasern, insbesondere der Bi-oder Mehrkomponentenfasern insbesondere 1,0 bis 6,5 dtex, weiter insbesondere 1,2 bis 4,0 dtex, und weiter insbesondere 1,5 bis 3,0 dtex. Insbesondere vorteilhaft ist die Wahl an feinen Fasern, da mit der Feinheit der Fasern ein höherer Anteil an punktähnlichen Verbindungen erhalten werden kann, was positiv für den Zusammenhalt der Fasern innerhalb der Lagen, oder im Falle der Ausführung von mehreren Lagen, zwischen den Lagen ist und auch mit einer besseren Abriebfestigkeit einhergeht.

Die Faserlänge der Schmelzbindefasern, insbesondere der Bi-oder Mehrkomponentenfaser wird vorteilhafter Weise von 10 bis 80 mm, insbesondere von 20 bis 70 mm und vorzugsweise von 40 bis 50 mm gewählt. Damit sind vorteilhaft ein Durchdringen der jeweiligen Lage und ein Herstellen von Verbindungen an und mit den Faseroberflächen der weiteren Fasern möglich.

Als absorbierende cellulosische Fasern können Fasern jeglichen Ursprungs eingesetzt werden, solange Cellulose enthalten ist, wie bei Naturfasern, z.B. Bambusfasern, Baumwollfasern oder Holz und daraus gewonnenes Fluffpulp, oder insoweit Cellulose als Ausgangsstoff für die Weiterverarbeitung oder Aufbereitung zu daraus gewonnenen Regenerat-Fasern wie beispielsweise Viskosefasern dient.

Als absorbierende cellulosische Fasern werden bevorzugt Baumwollfasern, insbesondere Baumwoll-Kämmlinge, Viskosefasern oder Kombinationen davon eingesetzt werden.

Als hydrophile synthetische Fasern können vorzugsweise Fasern auf einer Polymerbasis von Polyolefinen, insbesondere PP oder PE, auf einer Polymerbasis von Polyester, auf einer Polymerbasis von Polyamiden, oder Kombinationen davon eingesetzt werden, wobei die synthetischen Fasern mit einer hydrophilen Avivage ausgestattet sein können.

In vorteilhafter Weise beträgt die Faserstärke der hydrophilen synthetischen Fasern insbesondere 0,9 bis 4,0 dtex, weiter insbesondere 0,9 bis 3,0 dtex, und weiter insbesondere 0,9 bis 2,2 dtex. Insbesondere vorteilhaft ist die Wahl an feinen Fasern, da mit der Feinheit der Fasern mehr Oberfläche und damit mehr Volumenkapazität zur Aufnahme von Flüssigkeit geschaffen werden kann.

Die Faserlänge der hydrophilen synthetischen Fasern wird vorteilhafter Weise insbesondere von 10 bis 50 mm, weiter insbesondere von 20 bis 50 mm und weiter insbesondere von 25 bis 50 mm gewählt. Damit ist vorteilhaft eine gleichmäßige Durchmischung des Fasermaterials mit den Schmelzbindefasern und deren bevorzugten Faserlängen möglich.

Die Verwendung von Polyester-basierten Fasern, sei es als Schmelzbindefasern, insbesondere als Bi- oder Mehrkomponentenfaser und/oder als hydrophile synthetische Faser erweist sich zudem insbesondere auch wegen deren bauschelastischen Verhaltens als besonders vorteilhaft.

Vorzugsweise weist die Beschichtung eine Höhe (Erstreckung senkrecht zur Richtung der flächenhaften Erstreckung der Unterseite der Flächenschutzmatte) von mindestens 0,2 mm, weiter insbesondere von höchstens 0,8 mm, weiter insbesondere von höchstens 0,6 mm und weiter insbesondere von höchstens 0,4 mm auf.

Mit diesen bevorzugten Höhen der Beschichtung kann vorteilhaft eine gute Abstandswirkung erreicht werden.

Die Höhe der Beschichtung kann mit einem Mikroskop (z.B. einem Digitalmikroskop der Firma Keyence, Modell VHX-5000 mit einem Zoomobjektiv VH-Z20R/W/T) ermittelt werden.

Die Beschichtung ist erfindungsgemäß nicht vollflächig, sondern besteht aus einzelnen Beschichtungselementen. Die Beschichtung kann aus punkt-, linien- und/oder partiell flächenförmigen Beschichtungselementen oder Kombinationen hiervon bestehen. Eine Beschichtung aus ausschließlich partiellen flächigen oder aus ausschließlich homogen verteilten punktförmigen Beschichtungselementen wird vorzugsweise nicht vorgenommen.

Bevorzugt kann die Beschichtung derart ausgeführt sein, dass diskrete Bereiche mit einer Ansammlung von Beschichtungselementen von Bereichen ohne Beschichtung oder von Bereichen mit einer Beschichtung von vergleichsweise niedrigem Bedeckungsgrad umgeben sind. Mit den Bereichen ohne Beschichtung oder Bereichen mit Beschichtung von niedrigem Bedeckungsgrad werden vorteilhaft in der Flächenschutzmatte Bereiche von höherer Luftdurchlässigkeit bereitgestellt.

Bevorzugt kann auch vorgesehen sein, dass die Beschichtung über die Fläche der Unterseite der Flächenschutzmatte gleichmäßig verteilte Beschichtungselemente, insbesondere linienförmige Beschichtungselemente, aufweist und so einen über die Fläche weitgehend gleichmäßig verteilten Bedeckungsgrad an Beschichtung aufweist. Diese Ausführung trägt insbesondere vorteilhaft zur Stabilität der Flächenschutzmatte und einer gleichmäßig verteilten Rutschfestigkeit auf der Unterseite bei.

Besonders bevorzugt umfasst die Beschichtung eine Vielzahl von Beschichtungslinien. Insbesondere bevorzugt besteht die Beschichtung aus einer Vielzahl an Beschichtungslinien.

Die Ausgestaltung der Beschichtung in Form von Beschichtungslinien ist vorteilhaft im Vergleich zu einem reinen Punktmuster oder reinen partiell flächigen Beschichtungen, da Beschichtungslinien der Flächenschutzmatte eine höhere Biegesteifigkeit verleihen und damit ein besseres Handling der Flächenschutzmatte ermöglichen.

Die Beschichtungslinien können dabei grundsätzlich sowohl gerade Linien als auch von einem geraden Verlauf abweichende Linien, wie gekrümmte Linien, wellenlinienförmige, zickzackförmige Linien, sowie sich schneidende gerade oder auch von einem geraden Verlauf abweichende Linien, wie gekrümmte, wellenlinienförmige, zickzackförmige Linien aufweisen. Die Linienführung kann grundsätzlich sowohl durchgehend als auch unterbrochen gestaltet sein, sofern die Linie als solche klar erkennbar bleibt. D. h., es sind auch gestrichelte, strichpunktierte oder gepunktete Beschichtungslinien im Sinne der vorliegenden Erfindung denkbar. Insbesondere dürfen die unterbrochenen Stellen nicht länger als das 10-fache, insbesondere nicht länger als das 8-fache, insbesondere nicht länger als das 6-fache, insbesondere nicht länger als das 4-fache der Linienbreite dieser unterbrochenen Stelle benachbarten Linie sein.

Insbesondere bevorzugt weisen die Beschichtungslinien eine Länge auf, die mindestens dem 5-fachen der Breite der jeweiligen Beschichtungslinie, vorzugsweise mindestens dem 6-fachen, weiter vorzugsweise mindestens dem 8-fachen und weiter vorzugsweise mindestens dem 10-fachen der Breite der jeweiligen Beschichtungslinie entspricht. Im Falle einer sich über die Erstreckung der Beschichtungslinie hinweg ändernden Breite wird die maximale Breite herangezogen.

Insbesondere bevorzugt umfasst oder besteht die Beschichtung aus Beschichtungslinien, wobei die Beschichtungslinien ein Verhältnis von Linienbreite zu Linienhöhe von höchstens 100, insbesondere höchstens 50, weiter insbesondere höchstens 40, weiter insbesondere höchstens 30, weiter insbesondere höchstens 20, weiter insbesondere höchstens 15 aufweisen.

Insbesondere bevorzugt umfasst oder besteht die Beschichtung aus Beschichtungslinien, wobei die Beschichtungslinien eine Linienbreite von mindestens 0,2 mm, insbesondere mindestens 0,3 mm, weiter insbesondere mindestens 0,4 mm, weiter insbesondere mindestens 0,5 mm, weiter insbesondere mindestens 0,6 mm, weiter insbesondere von höchstens 10 mm, weiter insbesondere höchstens 5 mm, weiter insbesondere höchstens 3 mm, weiter insbesondere höchstens 2,5 mm, weiter insbesondere höchstens 2,0 mm, weiter insbesondere höchstens 1,6 mm, weiter insbesondere höchstens 1,2 mm, weiter insbesondere höchstens 1,0 mm, weiter insbesondere höchstens 0,8 mm aufweisen.

Auf diese Weise können vergleichsweise schmale Beschichtungslinien bereitgestellt werden, die im Vergleich zu größeren flächenhaften Beschichtungen ein leichteres und rückstandsloses Entfernen der Flächenschutzmatte von der abzudeckenden Fläche ermöglichen.

Derartige schmale Beschichtungslinien können bevorzugt im Tiefdruckverfahren erzeugt werden. Grundsätzlich sind jedoch auch andere Verfahren, wie beispielsweise Siebdruckverfahren denkbar.

Bei der Ausgestaltung der Beschichtung als Linie erstreckt sich die Linie vorzugsweise nicht ausschließlich als eine Gerade in nur eine Vektorrichtung, sondern diese Beschichtung aus Beschichtungslinien weist wenigstens eine Krümmung und/oder wenigstens einen Knick auf. Hierdurch wird erreicht, dass die Beschichtungslinien nicht lediglich in einer Vorzugsrichtung verlaufen.

Die Beschichtung auf der Unterseite des Vliesmaterials kann eine Vielzahl von durch Beschichtungslinien gebildeter Einzelmuster aufweisen. Einzelmuster können dabei vorzugsweise Anordnungen als Mustergruppen aufweisen, bei denen zumindest zwei Musterelemente nebeneinander und in Kontakt stehend angeordnet sind, oder insbesondere auch Mustergruppen, bei denen ein Musterelement ein anderes Musterelement zumindest teilweise umgibt oder umläuft, wie beispielsweise konzentrische Anordnungen, oder ineinander liegende geometrische Figuren jeglicher Art, die sich in einem Punkt berühren.

Die Flächenschutzmatte weist auf der Unterseite des Vliesmaterials vorzugsweise einen Bedeckungsgrad durch die Beschichtung von mindestens 6 %, insbesondere mindestens 8 %, insbesondere mindestens 10%, weiter insbesondere mindestens 20%, und weiter insbesondere von höchstens 60%, insbesondere von höchstens 50%, weiter insbesondere höchstens 40%, und weiter insbesondere höchstens 30% auf.

Dabei ist insbesondere vorgesehen, dass die Beschichtung bzw. die Beschichtungselemente die Unterseite der Flächenschutzmatte im Wesentlichen in ihrer gesamten Erstreckung erfassen, also nicht nur spezielle Bereiche. Es ist daher bevorzugt vorgesehen, dass sich die Beschichtung über die gesamte Unterseite der Flächenschutzmatte erstreckt, wobei je nach vorgesehenem Beschichtungsmuster einzelne Bereiche der Unterseite, wie beispielsweise der Mittelbereich, eine erhöhte Dichte an Beschichtungselementen aufweisen kann und andere Bereiche, wie beispielsweise der Randbereich eine geringere Dichte aufweisen kann. Es ist auch denkbar, in manchen Bereichen auf der Unterseite der Flächenschutzmatte andere Beschichtungsmuster und/oder -elemente aufzubringen als in anderen Bereichen. So kann beispielsweise eine andere Beschichtung im Mittelbereich als im Randbereich vorgesehen sein.

So kann es auch bevorzugt sein, dass die Verteilung der Bedeckungsgrade der Beschichtung über die Unterseite der Flächenschutzmatte weitgehend gleichmäßig ist.

Nach einer weiter bevorzugten Ausführungsform der wegwerfbaren absorbierenden Flächenschutzmatte kann vorgesehen sein, dass, wenn über die Unterseite der wegwerfbaren absorbierenden Flächenschutzmatte ein imaginäres Gitternetz aus parallelen, äquidistanten, senkrecht zueinander verlaufenden Linien mit einer Kantenlänge von 20 mm eines jeden Gitterquadrats gelegt wird, die Unterseite im Bereich von mindestens einem Gitterquadrat, insbesondere von mindestens zwei Gitterquadraten, weiter insbesondere von mindestens drei Gitterquadraten, weiter insbesondere von mindestens vier Gitterquadraten jeder beliebigen quadratischen Anordnung von 9 Gitterquadraten eine Beschichtung aufweist.

Vorzugsweise ist vorgesehen, dass wenn über die Unterseite der wegwerfbaren absorbierenden Flächenschutzmatte ein imaginäres Gitternetz aus parallelen, äquidistanten, senkrecht zueinander verlaufenden Linien mit einer Kantenlänge von 20 mm eines jeden Gitterquadrats gelegt wird, die Unterseite im Bereich von höchstens 8 Gitterquadraten, weiter insbesondere von höchstens 7 Gitterquadraten, weiter insbesondere von höchstens 6 Gitterquadraten jeder beliebigen quadratischen Anordnung von 9 Gitterquadraten eine Beschichtung aufweist.

Auf diese Weise kann eine Flächenschutzmatte bereitgestellt werden, die aufgrund von Bereichen an Beschichtung, insbesondere einem Bedeckungsgrad an Beschichtung, einen stabilisierten Bereich mit Abstandshalterfunktion besitzt. Auf der anderen Seite bietet eine solche Flächenschutzmatte aber aufgrund der ebenso vorhandenen Bereiche ohne Beschichtung eine ausreichende Fläche zum Luftaustausch.

Dabei sind per Definition lediglich solche Gitterquadrate für die Ermittlung heranzuziehen, die vollständig im Bereich der Flächenschutzmatte liegen. Gitterquadrate, die durch die Randlinie der Flächenschutzmatte geschnitten werden, bleiben für die Auswertung der zu betrachtenden Gitterquadrate außer Betracht. In gleicher Weise wird das Verständnis zugrunde gelegt, dass ausschließlich quadratische Anordnungen von 9 Gitterquadraten betrachtet werden, welche vollständig im Bereich der Flächenschutzmatte liegen. Quadratische Anordnungen die durch die Randlinie der Flächenschutzmatte geschnitten werden, also quadratische Anordnungen, die sich über die Randlinien der Flächenschutzmatte hinauserstrecken, bleiben für die Auswertung unberücksichtigt.

Unter einem Gitternetz aus parallelen, äquidistanten, senkrecht zueinander verlaufenden Linien wird eine solche Anordnung an Linien verstanden, bei der eine Schar aus parallelen, äquidistanten Linien durch eine zweite Schar aus parallelen, äquidistanten Linien unter Bildung von rechten Winkeln geschnitten wird. Das so definierte Gitternetz ist beliebig ohne Vorzugsorientierung auf die Flächenschutzmatte auflegbar.

Die Gitterquadrate mit einer Beschichtung weisen vorzugsweise einen Bedeckungsgrad an Beschichtung auf. Dabei wird unter dem Bedeckungsgrad an Beschichtung der durch die Beschichtung innerhalb eines Gitterquadrates abgedeckte Bereich bezogen auf die Fläche des Gitterquadrates verstanden. Die jeweiligen Bedeckungsgrade ergeben sich durch die in den jeweiligen Gitterquadraten angeordneten Beschichtungen unabhängig von deren Gestaltung, sei es insbesondere punkt-, linien- und/oder partiell flächenförmig.

Für die Auswertung des Bedeckungsgrades der Beschichtung in Bezug auf die jeweiligen Gitterquadrate können beliebige Auswerteverfahren, z.B. Computerunterstützte Grafik- und Zeichenprogramme herangezogen werden.

Insbesondere sollen Gitterquadrate mit Beschichtung einen Bedeckungsgrad an Beschichtung von mindestens 5%, insbesondere mindestens 8%, weiter insbesondere mindestens 10%, weiter insbesondere höchstens 45%, weiter insbesondere höchstens 40%, weiter insbesondere höchstens 35% aufweisen. Diese Bedeckungsgrade tragen vorteilhaft sowohl zur Abstandswirkung als auch zur Festigkeit der Flächenschutzmatte bzw. des Vliesmaterials als auch zur Rutschhemmung der Flächenschutzmatte bei.

Insbesondere ist vorgesehen, dass wenn über die Unterseite der wegwerfbaren absorbierenden Flächenschutzmatte ein imaginäres Gitternetz aus parallelen, äquidistanten, senkrecht zueinander verlaufenden Linien mit einer Kantenlänge von 20 mm eines jeden Gitterquadrats gelegt wird, die Unterseite kein Gitterquadrat aufweist, das beschichtungsfrei ist. Hierdurch wird erreicht, dass über die gesamte Unterseite der Flächenschutzmatte gleichermaßen eine gute Abstandwirkung und/oder auch Rutschfestigkeit bereitgestellt werden kann. Die Gitterquadrate weisen dabei vorzugsweise die voranstehend beschriebenen Bedeckungsgrade pro Gitterquadrat auf.

Vorzugsweise weist die Beschichtung ein Flächengewicht von mindestens 5 $g/m^2$, insbesondere mindestens 10 $g/m^2$, weiter insbesondere mindestens 15 $g/m^2$, weiter insbesondere mindestens 20 $g/m^2$, weiter insbesondere von höchstens 50 $g/m^2$, weiter insbesondere von höchstens 40 $g/m^2$, weiter insbesondere von höchstens 30 $g/m^2$ auf.

Mit einem solchen Flächengewicht können trotz Beschichtung für den Erhalt einer Abstandswirkung als auch Rutschhemmung vorteilhaft gleichzeitig ausreichend unbeschichtete Bereiche des Vliesmaterials als Ventilations- und/oder Absorptionsflächen zur Verfügung stehen.

Die Beschichtung ist dabei vorzugsweise nicht als eine auf der abzudeckenden Fläche klebende Beschichtung ausgeführt.

Die Beschichtung ist insbesondere polymerbasiert und insbesondere auf Basis eines Polymers entnommen aus der Gruppe umfassend PE (Polyethylen), PP (Polypropylen), APAO (amorphe Polyalphaolefine), EVA (Ethylenvinylacetat), EVAC (Ethylenvinylacetat-Copolymere), PA (Polyamide), TPE-O (Thermoplastische Elastomere auf Olefinbasis), TPE-V (Vernetzte thermoplastische Elastomere auf Olefinbasis), TPE-E (Thermoplastische Copolyester), TPE-U (Thermoplastische Elastomere auf Urethanbasis), TPE-A (Thermoplastische Copolyamide, z.B. PEBA), TPE-S (Thermoplastische Styrol-Blockcopolymere), wie z.B. HSBC (hydrierte Styrol-Blockcopolymere), SEBS (Styrol-Ethylen-Butadien-Styrol-Polymere), SBS (Styrol-Butadien-Styrol), SEPS (Styrol-Ethylen-Propylen-Styrol) oder einer Kombination aus einer oder mehreren der genannten Polymere hiervon.

Für die Beschichtung werden bevorzugt Materialien mit einer Shore A-Härte von mindestens 30, insbesondere von mindestens 40, insbesondere von mindestens 50, weiter insbesondere mindestens 60 und insbesondere von höchstens 90, weiter insbesondere von höchstens 80, weiter insbesondere höchstens 70 vorgesehen. Die Messung der Shore A-Härte erfolgt nach den Normen DIN 53505:2000-08 und ISO 868:2003(E). Es wird dabei ein Härteprüfgerät nach Shore A eingesetzt.

Die Shore A-Härte stellt einen Werkstoffkennwert für Elastomere und Kunststoffe dar. Die Shore-A-Härte wird hierbei nach folgender Methode bestimmt.

Methode zur Bestimmung der Shore-A Härte:

Die Shore-A-Härte ist ein Maß für den Widerstand eines Materials gegen das Eindringen eines Körpers von bestimmter Form und unter einer definierten Federkraft. Dabei gibt bei den Shore-Härte-Einheiten der Wert 0 die kleinste und der Wert 100 die größte Härte an.

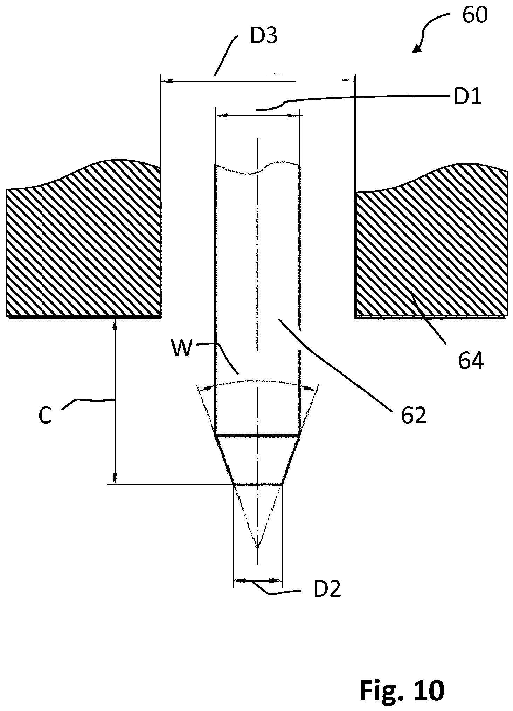

Die Messung erfolgt in Anlehnung an die Normen DIN 53505:2000-08 und ISO 868:2003(E). Es wird dabei ein Härteprüfgerät nach Shore A eingesetzt. Ein solches Härteprüfgerät nach Shore A, das schematisch in Figur 10 mit dem Bezugszeichen 60 dargestellt ist, verwendet einen federbelasteten Eindruckkörper mit der Geometrie eines Kegelstumpfes. Der Eindruckkörper 62 aus Stahl hat einen Durchmesser D1 von $1{,}25 \pm 0{,}15$ mm, der in einen unteren Kegelstumpf mit einer unteren Fläche mit einem Durchmesser D2 von $0{,}79 \pm 0{,}01$ mm mit einem Neigungswinkel W von $35° \pm 0{,}25°$ mündet. Der Abstand C zwischen der unteren Kante eines Druckfußes 64 und der unteren Fläche des Eindruckkörpers beträgt $2{,}5 \pm 0{,}02$ mm. Der Eindruckkörper ist innerhalb des Druckfußes 64 mit einer Ausnehmung mit einem Durchmesser D3 von $3 \pm 0{,}5$ mm zentriert eingebracht.

Die Prüfung soll an mechanisch nicht vorbeanspruchten Probekörpern durchgeführt werden. Für die Prüfung soll der Prüfkörper bereits 16 Stunden auspolymerisiert bzw. ausvulkanisiert sein. Die Prüfung wird bei Standardbedingungen bei $23 \pm 2°$ C und $50 \pm 2\%$ Luftfeuchtigkeit durchgeführt. Die Probenkörper und die Geräte sind mindestens 1 Stunde lang entsprechend konditioniert.

Die Probenkörper brauchen Abmessungen, die Messungen wenigstens 12 mm von jeder Kante entfernt erlauben, und dabei über eine ausreichend planparallele Auflagefläche verfügen, damit der Druckfuß den Probenkörper auf einer Fläche im Radius von mindestens 6 mm um die Spitze des Eindruckkörpers berühren kann. Es sind Probenkörper mit einer Materialstärke von mindestens 4 mm erforderlich. Bei geringen Dicken können die Probenkörper aus mehreren dünneren Schichten zusammengesetzt sein. An jedem Probenkörper wird an mindestens 5 verschiedenen Stellen gemessen, wobei der Abstand von den Kanten des Probenkörpers mindestens 12 mm beträgt. Der Abstand zwischen den Messstellen soll mindestens 6 mm betragen. Das Andrückgewicht des Eindruckkörpers beträgt 1 kg.

Die Messzeit beträgt 3 Sekunden, d.h. die Härte wird 3 Sekunden nach der Berührung der Auflagefläche des Prüfgerätes und des Probekörpers abgelesen.

Die Unterseite mit der Beschichtung kann einen dynamischen Reibungskoeffizienten gemessen in Anlehnung an ASTM D 1894-01 von mindestens 0,6, insbesondere mindestens 0,8 und weiter insbesondere mindestens 1,0 aufweisen, wobei Höchstwerte von höchstens 2,0, weiter insbesondere höchstens 1,5 und weiter insbesondere höchstens 1,2 erreicht werden sollen. Hierdurch werden ausreichende Reibungskräfte, damit Rutschfestigkeit erzeugt, auf der anderen Seite jedoch eine leichte Entfernbarkeit der Flächenschutzmatte sichergestellt.

Test zur Ermittlung des dynamischen Gleitreibungskoeffizienten:

Vorliegend soll das Rutschverhalten von erfindungsgemäßen wegwerfbaren absorbierenden Flächenschutzmatten mit Beschichtung ermittelt werden. Hierbei wird die mit der Beschichtung versehene Unterseite der wegwerfbaren absorbierenden Flächenschutzmatte gegenüber einer standardisierten Oberfläche gezogen. Die hierbei auftretende Gleitreibungskraft A soll gemessen und hieraus dann der dynamische Gleitreibungskoeffizient ermittelt werden. Die Prüfmethode ist angelehnt an die ASTM D 1894-01, zur Bestimmung des Reibungsverhaltens von Kunststoff-Folien. Die Prüfkörper müssen mindestens 2 Stunden im Normklima bei $23° C \pm 2°C$ und $50\% \pm 2\%$ Luftfeuchtigkeit konditioniert

sein. Die Proben dürfen nicht geknickt, gefaltet oder zerkratzt sein; sonstige Veränderungen und Verunreinigungen sind zu vermeiden. Dasselbe gilt für die Prüfplatte aus Stahl. Das Prüfverfahren ist ebenso unter Normbedingungen (23°C ± 2°C, 50 % ± 2%) durchzuführen.

Aus der wegwerfbaren absorbierenden Flächenschutzmatte mit Beschichtung oder aus einer entsprechenden Rollenware wird ein Probenkörper einer Abmessung von 50 x 50 mm ausgestanzt und faltenfrei an einem Reibklotz befestigt. Bei der Rollenware handelt es sich aber um exakt dasjenige Material, aus dem die erfindungsmäßen wegwerfbare absorbierende Flächenschutzmatten ausgestanzt werden.

Der Reibklotz weist eine Grundfläche von 63 mm x 63 mm Kantenlänge, also eine Kontaktgrundfläche von 40 cm$^2$ und eine Masse von 200 g ± 5g auf. Er wird über einen Faden (ohne Eigendehnung) am Kraftaufnehmer einer Zugprüfmaschine nach DIN 51 221 Klasse 1 befestigt. Eine solche Zugprüfmaschine ist das Prüfgerät Zwick Roell Typ Z010 von der Firma Zwick GmbH&Co.KG, 89079 Ulm, Deutschland.

Das Zusatzgerät bestehend aus dem Probentisch und Reibklotz nach DIN EN ISO 8295:2014 wird ebenfalls von der Firma Zwick angeboten. Der Reibklotz mit dem Probenkörper wird auf einen definierten Werkstoff, eine glatt polierte Stahlplatte (DIN EN 1939: 2003-12) vorsichtig aufgelegt. 15 Sekunden nach dem Auflegen des Reibklotzes wird der Versuch gestartet. Die Prüfgeschwindigkeit beträgt 150 mm/min, sowohl für den eigentlichen Messweg von 130 mm, als auch für den Vor- und Nachmessweg von jeweils 10 mm. Für die Ermittlung des dynamischen Gleitreibungskoeffizienten μ wird nur der Kraftverlauf des Messwegs von 130 mm herangezogen. Der Test wird für wenigstens fünf Prüfkörper durchgeführt. Es wird ein Mittelwert x und die Standardabweichung s auf zwei Nachkommastellen gerundet angegeben. Der dynamische Gleitreibungskoeffizient ergibt sich aus dem Quotienten der so ermittelten Gleitreibungskraft A ausgedrückt in Gramm (g) durch die durch den Reibklotz ausgeübte Kraft von 200 g.

Die Basislage weist vorzugsweise a) mindestens 20 Gew-%, insbesondere mindestens 30 Gew-%, weiter insbesondere mindestens 40 Gew-%, weiter insbesondere mindestens 50 Gew-%, weiter insbesondere mindestens 60 Gew-% absorbierende cellulosische Fasern, insbesondere Baumwolle und/oder Viskosefasern, und/oder hydrophile synthetische Fasern, insbesondere Polyesterfasern bezogen auf das Gesamtgewicht des Fasermaterials der Basislage und b) mindestens 10 Gew%, insbesondere mindestens 20 Gew-%, weiter insbesondere mindestens 30 Gew-%, weiter insbesondere mindestens 40 Gew-% an Schmelzbindefasern, insbesondere Bi-oder Mehrkomponentenfasern, insbesondere Bikomponentenfasern auf Polyesterbasis, bezogen auf das Gesamtgewicht des Fasermaterials der Basislage auf.

Das Vliesmaterial der wegwerfbaren absorbierenden Flächenschutzmatte kann neben der absorbierenden Basislage ein, zwei oder mehrere weitere Vlieslagen aufweisen.

Vorzugweise weist das Vliesmaterial eine Abfolge an miteinander verbundenen Lagen umfassend die absorbierende Basislage und eine als Decklage auf der oberen Seite der Basislage angeordnete erste weitere Vlieslage auf.

Vorzugsweise weist das Vliesmaterial eine Abfolge an miteinander verbundenen Lagen umfassend die absorbierende Basislage und eine auf der unteren Seite der Basislage angeordnete zweite weitere Vlieslage auf.

Vorzugsweise weist das Vliesmaterial eine Abfolge an miteinander verbundenen Lagen umfassend die absorbierende Basislage, eine auf der oberen Seite der Basislage angeordnete erste weitere Vlieslage und eine auf der unteren Seite der Basislage angeordnete zweite weitere Vlieslage auf.

Im Falle von Ausführungsformen mit einer, zwei oder mehreren, der absorbierenden Basislage zugeordneten weiteren Vlieslagen, führen die Schmelzbindefasern, insbesondere die Bi- oder Mehrkomponentenfasern der absorbierenden Basislage unter vollständigem Beibehalt der Faserstruktur zu Klebepunkt-ähnlichen Verbindungen der Fasern auch zu den zugeordneten Lagen.

Im Falle einer bevorzugten Ausführung des Vliesmaterials mit an der absorbierenden Basislage angeordneten einen, zwei oder mehreren weiteren Vlieslagen, werden bevorzugt auch in der einen, den zwei oder den mehreren weiteren Vlieslagen Schmelzbindefasern, insbesondere Bi- oder Mehrkomponentenfasern eingesetzt, insbesondere vorzugsweise werden in der Basislage und in der einen, den zwei oder den mehreren weiteren Vlieslagen die identischen Schmelzbindefasern, insbesondere Bi- oder Mehrkomponentenfasern eingesetzt.

Es ist aber auch denkbar, dass in einer bevorzugten Ausführung des Vliesmaterials der wegwerfbaren absorbierenden Flächenschutzmatte mit einer, zwei oder mehreren weiteren Vlieslagen, die weitere Vlieslage als eine Spunbondvlieslage, eine Meltblownvlieslage, oder als eine Kombination aus Spunbond- und Meltblownvlieslagen ausgebildet ist. Hierbei ist die höhere Abriebfestigkeit von Spunbondvliesen und/oder Meltblownvliesen auf der Oberseite und/oder Unterseite der wegwerfbaren absorbierenden Flächenschutzmatte von Vorteil.

Die Abfolge an miteinander verbundenen Lagen wird vorzugsweise ausschließlich unter Einsatz von thermischen und mechanischen Mitteln erhalten, dabei unter Ausschluss des Einsatzes von chemischen Zusätzen, wie Tränkung mittels flüssigen Bindemitteln und/ oder Einsatz von Klebemitteln.

Es sind aber auch Ausführungsformen denkbar, für deren Vliesmaterial keine weitere Vlieslage vorgesehen ist und das Vliesmaterial ausschließlich aus der absorbierenden Basislage besteht.

Nach einer besonders bevorzugten Ausführungsform der wegwerfbaren absorbierenden Flächenschutzmatte ist an der Basislage zumindest eine weitere Vlieslage oder zwei oder mehrere weitere Vlieslagen vorgesehen, die sich hinsichtlich zumindest einer Eigenschaft von der Basislage unterscheidet, wobei die Eigenschaft aus der Gruppe Faserzusammensetzung, Flächengewicht, Dicke, Dichte, Wasserhaltevermögen entnommen ist.

Auf diese Weise können die Eigenschaften der Lagen noch besser aufeinander abgestimmt werden, indem Lagen eingesetzt werden, die einander ergänzen. So kann z.B. die weitere Vlieslage, insbesondere in ihrer Anordnung als eine die Oberseite bildende Decklage so gestaltet sein, dass sie Flüssigkeit von der Oberseite schnellstmöglich abzieht und an die Basislage weiterleitet.

In einer besonders bevorzugten Ausgestaltung der wegwerfbaren absorbierenden Flächenschutzmatte ist eine weitere Vlieslage als Decklage auf einer oberen Seite der Basislage angeordnet, wobei die Decklage ein Fasermaterial aus Stapelfasern umfassend a) absorbierende cellulosische Fasern und/oder hydrophile synthetische Fasern und b) Schmelzbindefasern, insbesondere Bi- oder Mehrkomponentenfasern aufweist.

Besonders bevorzugt ist dabei, wenn die weitere Vlieslage, insbesondere in der Ausführung als Decklage, 20 - 40 Gew-% Schmelzbindefasern, insbesondere Bi-oder Mehrkomponentenfasern, insbesondere auf Polyesterbasis, mindestens 20 Gew-%, vorzugsweise mindestens 30 Gew-% hydrophile synthetische Fasern, insbesondere Polyesterfasern, und gegebenenfalls/optional zusätzlich bis zu 50 Gew-%, insbesondere bis zu 40 Gew-% cellulosebasierte Fasern, insbesondere Viskosefasern, bezogen auf das Gesamtgewicht des Fasermaterials der weiteren Vlieslage, insbesondere der Decklage, aufweist.

In der bevorzugten Ausführungsform des Vliesmaterials mit einer auf der Basislage angeordneten Decklage kann vorgesehen sein, dass die Basislage 20 -50 Gew-% Schmelzbindefasern, insbesondere Bi- oder Mehrkomponentenfasern, vorzugsweise auf Polyesterbasis, mindestens 40 Gew-% cellulosebasierte Fasern, insbesondere Baumwolle, und gegebenenfalls/optional zusätzlich bis zu 10 Gew-% hydrophile synthetische Fasern, insbesondere Polyesterfasern, bezogen auf das Gesamtgewicht des Fasermaterials der Basislage aufweist.

Bei Ausführungen des Vliesmaterials der wegwerfbaren absorbierenden Flächenschutzmatte mit einer, zwei oder mehreren weiteren Vlieslagen, insbesondere in der Ausführung mit einer weiteren Vlieslage als Decklage, die auf einer oberen Seite der Basislage angeordnet ist, so kann diese weitere Vlieslage, insbesondere als Decklage, weitere Komponenten, wie beispielsweise superabsorbierende Komponenten, Wirkstoffe oder geruchsbindende Stoffe oder Duftstoffe, insbesondere mikroverkapselte Parfümöle aufweisen.

Vorzugsweise ist das Vliesmaterial, insbesondere an seiner Oberseite und/oder seiner Unterseite, weiter mechanisch verfestigt, insbesondere wasserstrahlverfestigt, mechanisch vernadelt und/oder partiell verprägt oder vollflächig geglättet.

Chemische flüssige und damit das Vliesmaterial durchtränkende und damit vollständig durchdringende Bindemittelzusätze werden vorzugsweise vermieden, um damit die dem Vliesmaterial zueigenen und gewünschten Merkmale, wie insbesondere Luftdurchlässigkeit oder aber auch ein ausgewogenes Maß an Biegesteifigkeit zu erhalten.

Besonders bevorzugt ist im Falle einer Ausführung eines mehrlagiges Vliesmaterials, wenn die Basislage und/oder die eine, zwei oder die mehreren weiteren Vlieslagen, insbesondere die Decklage, vor der Laminatbildung einem Verfestigungsprozess unterzogen werden. Dabei können bekannte Verfestigungsprozesse, wie thermische Verfestigungsverfahren, Kalandrieren, mechanisches Vernadeln, Wasserstrahlvernadeln, etc. eingesetzt werden. Vorzugsweise werden Kombinationen von den vorgenannten Verfestigungsprozessen eingesetzt. Insbesondere bevorzugt wird Wasserstrahlvernadeln oder mechanisches Vernadeln mit einer anschließenden thermischen Verfestigung vorgenommen. Auf diese Weise kann die Stabilität der Lage bzw. Lagen als auch damit des Gesamtproduktes verbessert werden, was auch in verbesserten Tritteigenschaften resultiert, was insbesondere für Ausführungen der Flächenschutzmatte als Fußmatte oder Tierplatzmatte wünschenswert ist. Darüber hinaus kann z.B. durch das mechanische Vernadeln, insbesondere der Decklage, die Porosität der Decklage verbessert werden und damit die Fähigkeit Flüssigkeit durchzuleiten.

Um eine gute Verbindung zwischen der Basislage und der einen, der zwei oder mehreren weiteren Vlieslagen sicherzustellen, ist es bevorzugt, wenn die Lagen im Wesentlichen über deren gesamte überlappende Flächen verbunden sind.

Besonders bevorzugt ist eine partielle oder punktuelle Verbindung, die über die gesamte überlappende Fläche verteilt ist. Weiterhin bevorzugt kann die Verbindung über Prägemuster erfolgen. Insbesondere bevorzugt sind die Basislage und d eine, zwei oder mehrereweitere Vlieslagen über ein über Kalandrierung erzeugtes Prägemuster miteinander verbunden. Durch die Einbringung von Prägemustern in die Lagen und die Verbindung der Lagen hierdurch kann die Kapillarität erhöht werden, so dass der Flüssigkeitstransport verbessert wird. Der Anteil an Prägestellen an der Gesamtfläche der wegwerfbare absorbierenden Flächenschutzmatte beträgt vorzugsweise 5 - 30%.

Um Flüssigkeit möglichst effektiv von der Oberseite des Vliesmaterials abzuleiten, kann bevorzugt vorgesehen sein, dass die wegwerfbare absorbierende Flächenschutzmatte eine Einsickerzeit von maximal 20 sec, insbesondere maximal 15 sec und insbesondere maximal 10 sec aufweist.

Die Einsickerzeit wird dabei nach folgendem Verfahren bestimmt:

Mit der Einsickerzeit soll die Fähigkeit der wegwerfbaren absorbierenden Flächenschutzmatte beschrieben werden, Feuchtigkeit von der oberseitenzugewandten Produktoberfläche aufzunehmen und damit fernzuhalten.

Als Prüfgeräte sind notwendig:

- Eine Stoppuhr mit Sekundeneinteilung,

- eine Flüssigkeitszuführvorrichtung,

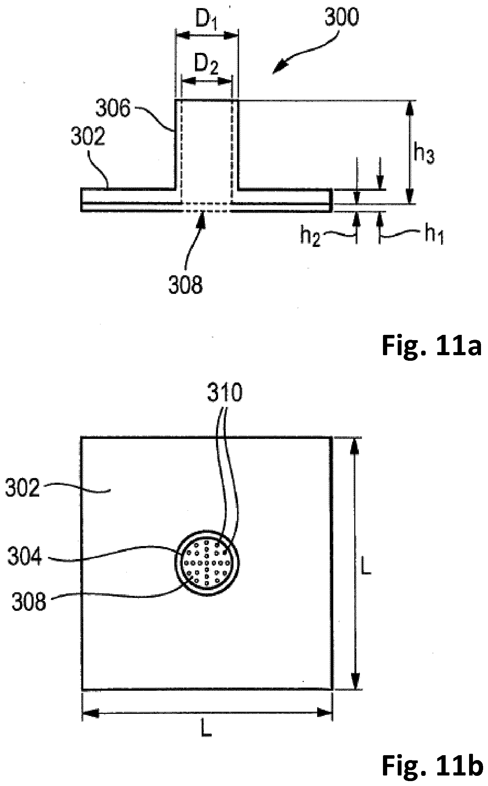

- Der Aufbau dieser Zuführvorrichtung ist zusammen mit den Figuren 11a und 11b näher erläutert, wobei Figur 11a eine Seitenansicht und Figur 11b eine Draufsicht von oben darstellt. Die Zuführvorrichtung 300 ist aus Stahl mit einem Gewicht von 500-510g und weist eine Bodenplatte 302 mit einer Erstreckung L von 100 mm x 100 mm und einer Höhe h1 von insgesamt 8 mm auf. In dieser Bodenplatte 302 ist mittig eine Öffnung 304 eingebracht, aus der sich ein Zylinder 306 mit einem Außendurchmesser D1 von 25 mm, mit einem Innendurchmesser D2 von 20 mm und mit einer Gesamthöhe h3 von 41 mm erstreckt. Das untere, zur Bodenplatte gerichtete Ende des Zylinders weist eine siebartige Struktur 308 auf. Darin sind 25 Löcher 310 mit einem Durchmesser von 1 mm angeordnet. Diese Siebstruktur bzw. die Löcher haben dabei eine Höhe h2 von 2 mm.

- Kolbenhubpipette z.B. von Eppendorf, mit einer Genauigkeit von 0,5 -5 ml, einstellbar auf ein Pipettiermaß von 2 ml, mit entsprechender Pipettenspitze,

- Prüflösung: demineralisiertes Wasser.

Die Prüfkörper müssen für die Durchführung des Prüfungsverfahrens flach ausgelegt sein. Gegebenenfalls sind bei gewölbten Prüfprodukten die Ränder so einzuschneiden, bis das Prüfmuster flachgelegt werden kann.

Die Prüfkörper müssen mindestens 2 Stunden im Normklima bei 23° C $\pm$ 2°C und 50% $\pm$ 2% Luftfeuchtigkeit konditioniert sein. Die Proben dürfen in dem Bereich, der für das Platzieren des Öffnungszylinders der Zuführvorrichtung vorgesehen ist, nicht geknickt oder gefaltet sein, auch sonstige Veränderungen und Verunreinigungen sind zu vermeiden.

Als Prüfkörper wird die ganze wegwerfbare absorbierende Flächenschutzmatte oder daraus erhaltene Prüfkörper einer Dimension von mindestens 100 mm x 100 mm eingesetzt.

Zur Prüfung wird die Flächenschutzmatte bzw. der daraus erhaltene Prüfkörper mit der Oberseite nach oben flach ausgebreitet. Die oben beschriebene Flüssigkeitszuführvorrichtung wird auf den ausgebreiteten Prüfkörper aufgesetzt, so dass die Öffnung des Zufuhrzylinders mittig auf dem Prüfkörper positioniert ist. 2 ml Prüflösung werden durch den Öffnungszylinder auf den Prüfkörper gegossen. Hierzu wird die eingesetzte Messpipette mit dem Ende der Pipettenspitze auf Höhe der oberen Kante des Öffnungszylinders und mittig innerhalb des Öffnungszylinders mit einem Zug durchgedrückt und die 2 ml Prüfflüssigkeit freigesetzt. Die Einsickerzeit ist beendet und wird gemessen, sobald keine Prüfflüssigkeit mehr im Öffnungszylinder sichtbar ist.

Für den Test werden 5 Messungen an 5 Prüfkörpern der Flächenschutzmatte durchgeführt.

Die Einsickerzeit wird als Mittelwert in Sekunden ohne Nachkommastelle angegeben.

Das Absorptionsverhalten kann weiter bevorzugt dadurch verbessert werden, dass die wegwerfbare absorbierende Flächenschutzmatte, insbesondere die Basislage und/oder eine oder zwei oder mehrere weitere Vlieslagen ein Wasserhaltevermögen von mindestens 1 g/g und höchstens 15 g/g (Gramm Flüssigkeit je Gramm Vlieslage) aufweisen. Weiter bevorzugt beträgt das Wasserhaltevermögen von Basislage und/oder von der einen oder zwei oder mehreren weiteren Vlieslagen, mindestens 2 g/g, weiter insbesondere mindestens 4 g/g und weiter bevorzugt von mindestens 5 g/g, wobei Höchstwerte von 12 g/g eine besonders bevorzugte Ausführungsform betreffen.

Vorzugsweise ist das Wasserhaltevermögen der absorbierenden Basislage höher als das Wasserhaltevermögen der einen, der zwei oder mehreren weiteren Vlieslagen, insbesondere der Decklage, um damit die Flüssigkeit von der Oberseite wegzuleiten.

Das Wasserhaltevermögen der wegwerfbaren absorbierenden Flächenschutzmatte beträgt insbesondere zwischen 1 g/g und 15 g/g.

Weiterhin kann es günstig sein, wenn die Decklage in der Lage ist, die Flüssigkeit in lateraler Richtung also in der Fläche der Decklage zu verteilen, um die Kapazität der Basislage zur Flüssigkeitsabsorption möglichst gleichmäßig und damit optimal zu nutzen.

Das Wasserhaltevermögen wird mittels folgender Methode bestimmt:

Als Prüfgeräte werden hierfür eingesetzt:

- Ein kuvertartiges, zweiflächiges Drahtgitter zwischen das die späteren Proben eingebracht werden. Das Drahtgitter hat Außenmaße 120 mm x 120 mm, mit einer Maschenweite von 1,5 - 2 mm und einer Masse von ca. 23 +/- 2 g.

- Becherglas bzw. Gefäß, mit einer für die Aufnahme des Drahtgitters geeigneten Dimension
- eine Präzisionswaage mit einer Angabe von 2 Dezimalen nach dem Komma,
- eine Stoppuhr mit Sekundenteilung
- ein Stanzmesser von 100 x 100 mm
- Demineralisiertes Wasser

Zur Probenvorbereitung werden aus Proben-Teststreifen von 100 mm x 100 mm aus der zu prüfenden Lage oder aus dem Gesamtprodukt ausgestanzt. Sollten die Proben schmaler sein, werden schmalere Teststreifen ausgestanzt und nebeneinander gelegt, so dass eine Fläche von 100 x 100 mm vermessen werden kann.

Zur Bestimmung des Wasserhaltevermögens der Einzellagen sind die Lagen entsprechend aus dem Gesamtprodukt, der wegwerfbaren absorbierenden Flächenschutzmatte, zu separieren.

Die Proben werden vor der Prüfung mindestens 24 Stunden bei 23°C ± 2°C und 50% ± 2% relativer Luftfeuchtigkeit klimatisiert. Zwischen den Deckflächen des Drahtgitters werden die Prüflinge mit einem Gesamtgewicht von mindestens 1 g (auf 0,01 g genau gewogen (M1)) gleichmäßig in das Drahtgitter eingespannt. Falls eine Einzelprobe weniger als 1 g wiegt, werden mehrere Proben zu einem Probenstapel geschichtet, der wenigstens 1 g wiegen soll. Das Drahtgitter wird zusammen mit der Probe in demineralisiertes Wasser getaucht und verbleibt darin 60 sec. Sodann wird das Drahtgitter zusammen mit der Probe aus der Flüssigkeit entnommen, und man lässt die Flüssigkeit 120 sec lang über eine Ecke abtropfen. Die Proben werden aus dem Drahtgitter entnommen und dann erneut auf 0,01 g genau gewogen (M2).

Das Wasseraufnahmevermögen wird nach der Gleichung (M2 - M1)/ M1 errechnet und dann in g/g angegeben. Der Wert ergibt sich als Mittelwert aus 3 Bestimmungen auf eine Nachkommastelle gerundet.

Die wegwerfbare absorbierende Flächenschutzmatte weist vorzugsweise eine Biegesteifigkeit von mindestens 50 mN, insbesondere von mindestens 300 mN, von mindestens 600 mN, weiter insbesondere höchstens 3000 mN und weiter insbesondere höchstens 2000 mN auf.

Die Biegesteifigkeit wird hierbei mit nachfolgendem Test bestimmt:

Test zur Ermittlung der Biegesteifigkeit:

Zur Ermittlung der Rückstellkraft, also der Eigenstabilität von erfindungsgemäßen wegwerfbare absorbierende Flächenschutzmatten, wird die Biegesteifigkeit von jeweils 10 Probekörpern unter Verwendung eines kommerziell erhältlichen Geräts zur Ermittlung der Biegesteifigkeit bestimmt (bei 23 °C ± 2°C und 50% ± 2 % Luftfeuchtigkeit). Für die aktuelle Messung wurde der Gerätetyp 58963.013 der Firma Karl Frank GmbH, Weinheim-Birkenau, DE, verwendet. Es kann auch jedes ähnliche Gerät verwendet werden, wobei die Grundeinstellung des Geräts (Biegelänge, Kraftarm, Biegewinkel, Winkeldrehgeschwindigkeit) und auch der definierte Probenkörper beachtet werden müssen.

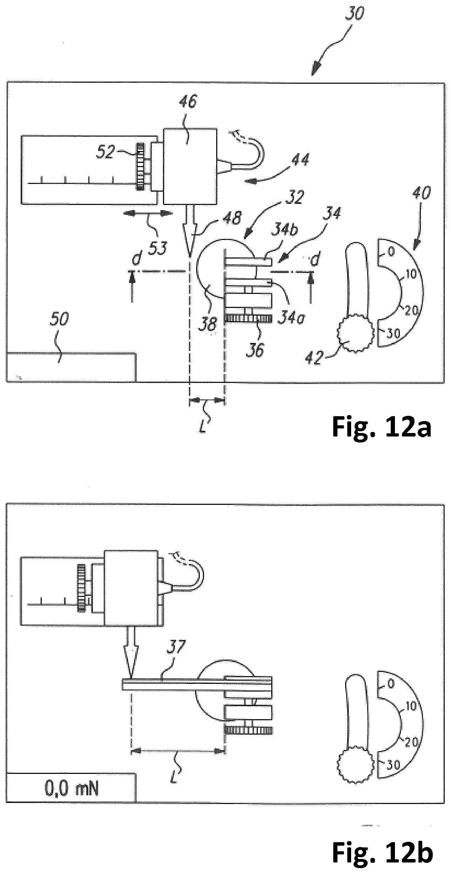

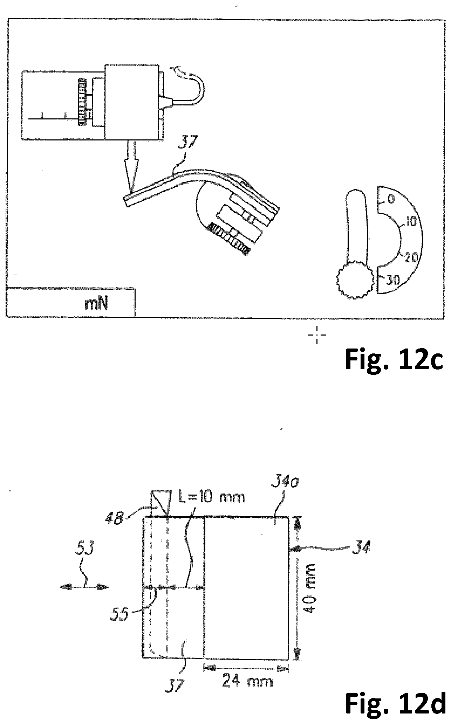

Es wurden jeweils 10 Probekörper der wegwerfbaren absorbierenden Flächenschutzmatte vermessen. Es wurde mit einem Biegewinkel von 30° und einer Biegelänge von 10 mm gearbeitet. Der Überhang für die Platzierung des Messfühlers beträgt 6 mm innerhalb des Randbereichs des Probekörpers 37 (siehe Figur 12b und 12d). Das für die Biegesteifigkeitsmessung eingesetzte Gerät 30 ist in den Figuren 12a bis 12d schematisch dargestellt. Für die Messung war zudem eine Drehwinkelgeschwindigkeit von 6°/sec. eingestellt. Als Probenkörper wurde ein Probenkörper mit den Abmessungen 40 mm x 40 mm definiert. Bei Flächenschutzmatten mit größerer Dimension wurde der entsprechend definierte Probenkörper ausgestanzt.

Das für die Biegesteifigkeitsmessung eingesetzte Gerät 30 umfasst dabei einen Probenhalter 32 mit einer Einspannklemme 34 und einer Rändelschraube 36, die ein Zusammentreffen der beiden Einspannplatten 34a und 34b zur Befestigung des Probenkörpers 37 ermöglicht. Die Einspannklemme 34 ist dabei auf einer scheibenförmigen Platte 38 aufgebracht, wobei diese Platte 38 durch geräteinterne Funktionssteuerung bei der Durchführung der Messung eine Drehung im Uhrzeigersinn gemäß des eingegebenen Biegewinkels (hier 30°) durchführt. Die Drehwinkelgeschwindigkeit der Platte 38 beträgt 6°/sec. Die Wahl des Biegewinkels kann dabei an einem weiteren Vorrichtungsbereich 40 festgelegt und mittels einer Rändelschraube 42 justiert werden. Die eigentliche Messvorrichtung 44 umfasst eine Messzelle 46. Hierin werden die durch einen Messfühler 48 aufgenommenen Kräfte in einen Kraftmesswert umgewandelt und letztlich als Messwert auf einem Display 50 angezeigt. Der Messfühler 48 ist bei diesem Gerät in Form einer vertikal stehenden Schneide ausgeführt. Die schon erwähnte Biegelänge L (also die Länge des Kraftarms) ist dabei durch Justierung der Messvorrichtung 44 über eine Rändelschraube 52 in Richtung des Pfeils 53 einstellbar. Die Biegelänge L ist dabei zu verstehen als die Länge des Bereichs, der sich zwischen Messfühler und nächstliegender Kante der Einspannklemme 34 befindet und den Kraftarm bildet; die Biegelänge L ist 10 mm.

Für die Versuchsdurchführung wird der viereckige Probenkörper 37 (siehe Figur 12d) zwischen die Einspannplatte 34a, b der Einspannklemme 34 im Probenhalter 32 fixiert. Die Einspannklemme 34 und ihre Einspannplatten 34 a, b weisen hierbei eine Breite von 2,4 cm und eine Länge von 4,0 cm auf. Der Probenkörper 37 ist dabei mit der die Beschichtung aufweisenden Unterseite in Richtung des Messfühlers eingespannt. Vor Versuchsbeginn wird außerdem die Schneide des Messfühlers bis zur Berührung der Probe an den anderen Endbereich des Probenkörpers herangeführt und justiert, so dass der Probenköper die Schneide des Messfühlers gerade berührt. Ein Überhang 55 des Probenkörpers 37 über die Schneide des Messfühlers beträgt ca. 6 mm (siehe Figur 12d). Bei Durchführung der Messung dreht sich die Platte 38 mit der Einspannklemme 34 im Uhrzeigersinn bis zu dem angegebenen Biegewinkel, was dann zu einer Verformung des Probenkörpers führt. Der Probenkörper wird gegen die Messzelle gebogen. Die durch die Verformung verursachten Kräfte werden in ablesbare Messdaten umgewandelt und an dem Display 50 angezeigt.

Vorzugsweise weist die wegwerfbare absorbierende Flächenschutzmatte eine Luftdurchlässigkeit von mindestens 50 mm/s, insbesondere mindestens 70 mm/s, weiter insbesondere mindestens 100 mm/s auf.

Die Bestimmung der Luftdurchlässigkeit erfolgt dabei wie folgt:

Die Messung der Luftdurchlässigkeit ist an die Norm DIN EN ISO 9237: 1995-12 angelehnt. Die Luftdurchlässigkeit wird ausgedrückt als Geschwindigkeit eines Luftstromes, welcher unter festgelegten Bedingungen, nämlich für die Prüffläche, dem Differenzdruck und der Zeit, senkrecht zur Oberfläche durch die Messprobe hindurchgeht.

Als Prüfgerät ist ein Luftdurchlässigkeitsprüfgerät nach DIN EN ISO 9237 einzusetzen. Ein derartiges Luftdurchlässigkeitsprüfgerät umfasst einen kreisförmigen Probenhalter mit einer Öffnung mit einer definierten Prüffläche, von 20 cm$^2$, weiter eine Vorrichtung zur verwindungsfreien und sicheren Befestigung der Messprobe, weiter bevorzugt auch zusätzlich eine Schutzringvorrichtung, als Zusatz zur vorgenannten Vorrichtung zur Verhinderung von Entweichen von Luft über die Probenkanten, weiter ein mit dem Prüfkopf verbundenes Druckmessgerät, eine Vorrichtung zur Erzeugung einer konstanten Luftströmung und zur Einstellung der Strömungsgeschwindigkeit, mit der ein Differenzdruck erzeugt werden kann und weiter ein Durchflussmessgerät zur Anzeige der Strömungsgeschwindigkeit. Für die Durchführung der Messung kann beispielsweise das Gerät Typ FX 3300 Labortester III der Firma Textest AG, Schwerzenbach, Schweiz eingesetzt werden.

Zur Probenvorbereitung ist vor Beginn der Prüfung die Probe mindestens 24 Stunden im Normklima bei 20 $\pm$ 2 °C und 65 $\pm$ 4% relativer Luftfeuchtigkeit zu lagern. Bei der Prüfung sind die gleichen Bedingungen einzustellen (20 $\pm$ 2 °C und 65 $\pm$ 4% RF).
Das Prüfmuster ist auf dem kreisförmigen Probenhalter zur Vermeidung von Falten mit ausreichender Spannung zu befestigen. Falls jedoch Falten entstehen, ist darauf zu achten, dass sich das Flächengebilde, also das Prüfmuster nicht in der Einspannebene verwindet wird. Bei der zu messenden Flächenschutzmatte wird die Unterseite mit der Beschichtung in Richtung der Unterdruckseite eingespannt, um Lecks zu vermeiden. Das Sauggebläse, das geeignet ist, die Luft durch das Prüfmuster hindurch zu drücken oder eine sonstige derartige Vorrichtung ist in Betrieb zu nehmen und die Strömungsgeschwindigkeit ist bis zum Erreichen des Differenzdruckes stufenlos einzustellen. Nach Erreichen von Strömungsgeschwindigkeiten unter stabilen Bedingungen, zumindest nach Abwarten von mindestens einer Minute ist die Strömungsgeschwindigkeit zu notieren. Die Prüfung ist an unterschiedlichen Stellen der Messprobe mindestens 10 mal unter den gleichen Bedingungen zu wiederholen. Als Differenzdruck wird im vorliegenden Fall der Flächenschutzmatte 100 Pa eingesetzt.

Die Luftdurchlässigkeit R ist in mm/s mit Hilfe der in der Norm angegebenen Gleichung zu berechnen:

$$R = \frac{q\,(v)}{A} \times 167$$

Dabei bedeuten

q (v) : arithmetisches Mittel des Luftstromes in dm$^3$/min (l/min)
A : Prüffläche, in cm$^2$, hier 20 cm$^2$
167: Umrechnungsfaktor von dm$^3$/min oder l/min je cm$^2$, in mm/s

Im Falle von Untersuchungen, in denen kein der Prüffläche des kreisförmigen Probenhalters angepasstes Prüfmuster vorhanden ist oder bereitgestellt werden kann, wie beispielsweise bei kleineren und/oder nicht kreisförmigen Prüfmustern, kann ein Prüfmuster mittels Zusammenbau mit einem Trägermaterial eingesetzt werden. Dann müssen bei Messung neben der Messung des eigentlichen Prüfmusters parallele zur Korrektur und Normierung notwendige Messungen, sogenannte Negativ- und Nullkontrollen, die die Träger- und Klebematerialien berücksichtigen, mitgeführt und in die Auswertung miteinbezogen werden.

Vorzugsweise weist die wegwerfbare absorbierende Flächenschutzmatte eine Festigkeit bzw. Höchstzugkraft in Längsrichtung (Maschinenrichtung) und/oder eine Festigkeit bzw. eine Höchstzugkraft in Querrichtung (quer zur Maschinenrichtung) von mindestens 10 N/25mm, weiter insbesondere mindestens 30 N/25mm, weiter insbesondere mindestens 50 N/25 mm, weiter insbesondere mindestens 80 N/25mm, weiter insbesondere mindestens 100 N/25 mm auf.

Die Festigkeit in MD/CD wird hierbei mit nachfolgendem Test bestimmt:

Diese Höchstzugkraft kann unter Verwendung einer genormten Zugprüfmaschine nach DIN 51221 ermittelt werden: Es werden aus der zu prüfenden Flächenschutzmatte, und zwar aus einem mittleren Bereich, Proben von einer Breite von 25 mm und einer Länge, die größer ist als die Einspannlänge von 30 mm, vorzugsweise von 50 mm, ausgestanzt. Dabei ist die jeweils zu prüfende Richtung des Reinigungsartikels, ob MD- oder CD-Richtung, zu berücksichtigen. Für die Prüfung werden die Probenstreifen lotrecht und spannungsfrei in den Klemmen der Zugprüfmaschine mit einer Einspannbreite von 25 mm und einer Einspannlänge (der Abstand zwischen den Klemmen) von 30 mm fixiert. Die derart eingespannten Proben werden dann mit einer Prüfgeschwindigkeit von 100 mm/min in der Ebene ihrer Erstreckung auseinanderbewegt und dabei wird die in dieser Richtung wirkende Zugkraft gemessen. Unter der Höchstzugkraft wird diejenige maximale Kraft verstanden, bei der der Probenstreifen zerreißt. Wenn zuvor höhere Kraftspitzen im Zuge der Dehnung gemessen werden, so stellen diese die Höchstzugkraft im Sinne dieser Prüfung dar. Man kann vorteilhafterweise bei Messungen der Längs- und der Querrichtung, welche der Maschinenrichtung bzw. der Richtung quer hierzu entspricht, verschiedene, insbesondere fünf Einzelmessungen vornehmen und deren Mittelwert berechnen. Die Angabe erfolgt in N/25mm.

Vorzugsweise weist das Vliesmaterial der wegwerfbaren absorbierenden Flächenschutzmatte eine innere Festigkeit von mindestens $1{,}5\,N/25{,}5\,cm^2$, insbesondere von mindestens $5\,N/25{,}5\,cm^2$, weiter insbesondere von mindestens $7\,N/25{,}5\,cm^2$, weiter insbesondere von mindestens min. $10\,N/25{,}5\,cm^2$ auf.

Die innere Festigkeit wird nach folgender Methode bestimmt:

Wenn von innerer Festigkeit eines Vliesmaterials die Rede ist, so wird hierunter der mittels Netzwerkbildung der Schmelzbindefasern oder in sonstiger Weise erreichte Widerstand gegen ein Delaminieren des Faservliesmaterials bezeichnet. Dieser Widerstand wird dadurch bestimmt, dass das betrachtete Vliesmaterial im Wesentlichen senkrecht zu seiner flächenhaften Erstreckung auseinandergezogen wird.

Hierfür kann eine Zugprüfmaschine nach DIN 51221, Klasse 1 sowie zwei Hilfsbleche und doppelseitiges Klebeband verwendet werden. Eine flächenhafte kreisscheibenförmige Probe von 57 mm Durchmesser wird mittels des doppelseitigen Klebebands zwischen ein oberes und ein unteres Hilfsblech geklebt, von dem senkrecht ein einspannbarer Haltesteg vorsteht (T-Form). Sollten nur kleinere Probenmuster zur Verfügung stehen oder getestet werden können, so kann auch mit einer flächenhaften kreisscheibenförmigen Probe von 28,5 mm Durchmesser gearbeitet werden, wobei dies dann bei den Ergebnissen anzugeben wäre. Solchenfalls ist das Ergebnis auf eine Prüffläche von $25{,}5\,cm^2$ rechnerisch zu normieren. Die beiden Hilfsbleche werden in die Zugprüfmaschine eingespannt und dann mit einer Geschwindigkeit von 100 mm/min auseinanderbewegt; währenddessen wird die auftretende Zugkraft gemessen. Es wird dann die Höchstzugkraft ermittelt. Unter der Höchstzugkraft wird diejenige maximale Kraft verstanden, bei der der Zusammenhalt des Vliesmaterials zerstört wird. Wenn zuvor höhere Kraftspitzen im Zuge der Dehnung gemessen werden, so stellen diese die Höchstzugkraft im Sinne dieser Prüfung dar.

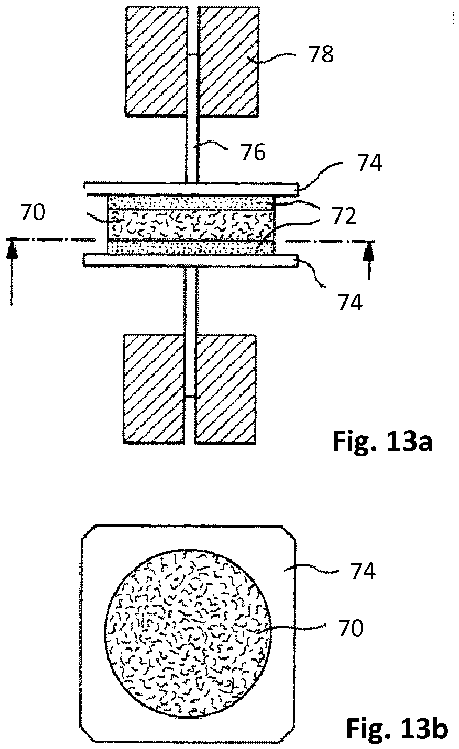

Die Figuren 13a und b zeigen schematisch den Versuchsaufbau. Man erkennt das kreisscheibenförmige Prüfmuster 70, sowie daran angrenzend jeweils das doppelseitige Klebeband 72 und die Hilfsbleche 74, die mit ihrem abstehenden Steg 76 in Klemmaufnahmen 78 der Zugprüfmaschine eingespannt sind.

Zur Probenpräparation wird ein der Größe des Prüfmusters entsprechender Abschnitt des vorstehend erwähnten Doppelklebebands jeweils oben und unten auf das zu testende Vliesmaterial aufgeklebt. Der so erhaltene Verbund wird (nach Abziehen der äußeren Deckschichten des Klebebands) zwischen den zwei Hilfsblechen angeordnet und zentrisch positioniert. Sodann werden die Hilfsbleche mittels eines Gewichtes einer Masse von 1 kg 1 min lang beschwert, so dass der Verbund aus Vliesmaterial und Doppelklebeband und Hilfsblechen innig miteinander verbunden wird. Dieser Verbund wird dann in die Zugprüfmaschine nach DIN 51221 eingespannt, und mit der erwähnten Geschwindigkeit von 100 mm/min werden die Klemmen auseinandergezogen und dabei die Zugkraft ermittelt. Aus wenigstens fünf Einzelmessungen wird der Mittelwert gebildet und in N angegeben.

Bei dem doppelseitigen Klebeband handelt es sich um ein Klebeband der Firma Tesa (tesa® Klebeband Universal, Artikelnummer: 56170/56171/56172) mit einer definierten Klebekraft von 10 N/cm $\pm$ 2 N/cm für die offene Seite des Klebebandes und von 12 N/cm $\pm$ 2 N/cm für die abgedeckte Seite. Bei der Probenpräparation wird die abgedeckte Seite des doppelseitigen Klebebands auf das Vliesmaterial und die offene Seite des doppelseitigen Klebebands auf das Hilfsblech geklebt.

Für die reproduzierbare Durchführung von Messungen wird die Klebekraft des doppelseitigen Klebebands nach der DIN EN 1939:2003-12, Verfahren 3, Messung der Klebkraft von doppelseitig beschichteten und übertragbaren Klebebändern auf nicht rostendem Stahl unter einem Winkel von 180° mit einer konstanten Abzugsgeschwindigkeit von 300 $\pm$ 30 mm/min, unter Standardbedingungen 23 $\pm$ 2°C und 50 $\pm$ 4% relativer Luftfeuchte, angegeben bzw. standardisiert. Die jeweils nicht zu prüfende Klebefläche ist durch eine 38 $\mu$m dicke Hart-PVC-Folie abgedeckt. Zur Ermittlung der Klebekraft ist der Kraftverlauf während des Prüfverfahrens zu ermitteln und aufzuzeichnen nach DIN ISO 6133:2004-05. Aus den erhaltenen Kraftspitzen ist dann die mittlere Klebekraft nach dem nachfolgend beschriebenen Verfahren C auszuwerten.

Bei abweichenden Kurvenverläufen ist gegebenenfalls nach den weiter unten beschriebenen Verfahren A oder B oder D auszuwerten. In diesen Fällen ist das Auswerteverfahren bei der Resultatsangabe mit anzugeben.

Auswerteverfahren C:

Dieses Verfahren ist anzuwenden, wenn das Diagramm mehr als 20 deutlich erkennbare Kraftspitzen aufweist. Voraussetzung ist dabei, dass die innerhalb des Diagramms vorkommenden Schwankungen nicht periodisch auftreten. Ist das der Fall, ist das Auswerteverfahren B anzuwenden. Ausgehend von der Mitte jener Diagrammlänge 1, die von der ersten Kraftspitze bis zum Abriss reicht, sind vier senkrechte Linien in gleichen Abständen von 1/10 dieser Diagrammlänge nach beiden Seiten einzureichen. Diese Abstände sind auf ganze Millimeter aufzurunden. Die neun Spitzenwerte, die diesen Linien am nächsten liegen, sind zur Bestimmung der Klebkraft heranzuziehen. Einzelne extrem aus dem Kurvenverlauf herausragende Spitzenwerte werden bei der Auswertung nicht mit berücksichtigt. Das Ergebnis ist als Mittelwert von mindestens fünf Prüfungen auf eine Nachkommastelle gerundet anzugeben. Weitere Angaben sind zulässig.

Die Klebkraft wird wie folgt berechnet:

$$F = \sum_{i=1}^{n} (Fi)$$

$F_i$ = Kraftspitzen $F_1$, $F_2$ ... $F_n$
n = Anzahl der ausgewerteten Kraftspitzen

Die Auswertung kann auch mit einem geeigneten PC-Programm erfolgen.

Auswerteverfahren A:

Dieses Verfahren ist anzuwenden, wenn das Diagramm bis fünf deutlich unterscheidbare Kraftspitzen aufweist. Der Mittelwert aus den Werten dieser Kraftspitzen ist zu bestimmen. Im Fall, dass im Diagramm nur eine Kraftspitze auftritt, ist der entsprechende Wert als "Mittelwert" zu betrachten.

Auswerteverfahren B:

Dieses Verfahren ist anzuwenden, wenn sechs bis 20 deutlich unterscheidbare Kraftspitzen im Diagramm erscheinen. Die Spitzenwerte der mittleren 80% jenes Diagrammbereichs, das mit der ersten Kraftspitze beginnt und mit dem Abriss endet, werden zur Bestimmung der Klebkraft herangezogen.

Auswerteverfahren D:

Dieses Verfahren ist anzuwenden, wenn die Spitzen nicht genau definiert sind, sondern eine wellige Kurve ergeben. Dann ist nur der arithmetische Mittelwert anzugeben, der sich als Mittelpunkt zwischen dem Maximum und dem Minimum der Schwankungen des Kurvenverlaufs ermittelt, wobei der anfängliche Anstieg zu Beginn der Prüfung ignoriert wird.

Insbesondere zeichnet sich die wegwerfbare absorbierende Flächenschutzmatte dadurch aus, dass die Oberseite eine Abriebfestigkeit gemessen als Faserfreisetzung nach der beschriebenen Methode von höchstens 10 mg, insbesondere von höchstens 8 mg, weiter insbesondere von höchstens 5 mg, weiter insbesondere von höchstens 2 mg aufweist.

Test zur Ermittlung der Abriebfestigkeit gemessen als Gewicht der Faserfreisetzung:

Wenn von Abriebfestigkeit bei Vliesmaterialien die Rede ist, so wird hierbei die durch Einsatz von Schmelzbindefasern und/oder in sonstiger Weise auf der Sichtseite, Ober- oder Unterseite des Vliesmaterials erreichte feste Einbindung der Fasern verstanden. Diese Abriebfestigkeit wird dadurch bestimmt, dass die unter Abzug eines Klebebandes von der Sichtseite des Vliesmaterials die aus dem Vliesmaterial freigesetzte Fasermenge ermittelt wird.

Für die Durchführung der Methode wird das zu untersuchende Vliesmaterial unterhalb einer Prüfplatte der Größe 115 mm $\pm$ 1 mm x 135 mm $\pm$ 1 mm und einer Dicke von 0,4 mm und dem innerhalb der Prüfplatte mittig angeordnetem Lochausschnitt mit einer Breite von 17 mm $\pm$ 1 mm und einer Länge von 53 mm $\pm$ 1 mm positioniert. Die zu prüfende Sichtseite des Vliesmaterials, hier die Oberseite der Flächenschutzmatte, ist dabei der Prüfplatte zugewendet und über den Lochausschnitt von oben zugänglich.

Das zu untersuchende Prüfmuster des Vliesmaterials muss hierbei zumindest die Größe des Lochausschnitts aufweisen. Das Anfangsgewicht des Prüfmusters ist zu notieren.

Ein den Lochausschnitt der Prüfplatte überfangenes Klebeband mit einer Breite von mindestens 19 mm wird auf die Prüfplatte und die Sichtseite des Vliesmaterials falten- und luftblasenfrei aufgebracht. Durch ein gleichmäßiges einmaliges Vor- und einmaliges Rückrollen mittels eines Handrollers mit einer Breite von 5 cm und mit einer Masse von 2kg wird das Klebeband mit der Sichtseite des Vliesmaterials in direkten Kontakt gebracht. Dann wird das Klebeband zusammen mit der Prüfplatte gleichmäßig und langsam von der Sichtseite des Vliesmaterials abgezogen, wobei die Prüfplatte und damit das Klebeband vom Vliesmaterial einen möglichst nahen Abstand zwischen Vliesmaterialsichtseite und Klebeband beibehalten soll. Während der Prüfung muss die 90°-Abzugsrichtung des Klebebands bezogen auf die Oberfläche des Vliesmaterials eingehalten werden.

Für die reproduzierbare Durchführung von Messungen muss ein Klebeband von definierter Klebekraft eingesetzt werden. Das für diese Messung eingesetzte Klebeband weist eine Klebekraft auf Stahl unter einem Abzugswinkel von 90° von 1,0 - 3,0 N auf. Die Ermittlung der Klebekraft ist nach der DIN EN 1939:2003-12, Verfahren 1, Anhang B mit einer konstanten Abzugsgeschwindigkeit von 300 $\pm$ 30 mm/min, unter Standardbedingungen 23 $\pm$ 2°C und 50 $\pm$ 4% relativer Luftfeuchte angegeben bzw. standardisiert. Als Klebeband wird ein Klebeband der Firma 3M (Scotch Magic Tape 810) eingesetzt. Zur Ermittlung der Klebekraft des Klebebandes ist der Kraftverlauf während des Prüfverfahrens nach DIN ISO 6133:2004-05 zu ermitteln und aufzuzeichnen, wie voranstehend in der Methode zur Bestimmung der inneren Festigkeit ausgeführt ist.

Die Menge an freigesetzten Fasern wird aus der Differenz des Gewichtes des Prüfmusters vor der Prüfung und des Gewichtes des Prüfmusters nach dem Klebeband-Abzugsvorgang ermittelt. Für die Gewichtsmessung wird eine Präzisionswaage mit einer Genauigkeit von 0,0001g eingesetzt.

Die Faserfreisetzung gemessen in mg bezieht sich auf eine Prüffläche von 901 mm$^2$, was der Dimension des Lochausschnitts mit einer Breite von17 mm $\pm$ 1 mm und einer Länge von 53 mm $\pm$ 1 mm entspricht.

Das Ergebnis wird als Mittelwert von mindestens fünf Prüfungen ermittelt.

Das Vliesmaterial weist vorzugsweise ein Flächengewicht von mindestens 35 g/m$^2$, vorzugsweise von mindestens 50 g/m$^2$, weiter vorzugsweise von mindestens 100 g/m$^2$, weiter vorzugsweise von mindestens 150 g/m$^2$, weiter vorzugsweise von mindestens 180 g/m$^2$, weiter vorzugsweise von mindestens 200 g/m$^2$, weiter vorzugsweise von mindestens 220 g/m$^2$, weiter vorzugsweise von höchstens 300 g/m$^2$, weiter vorzugsweise von höchstens 280 g/m$^2$, weiter vorzugsweise von höchstens 250 g/m$^2$ auf.

Vorzugsweise beträgt die Dicke der wegwerfbaren absorbierenden Flächenschutzmatte, dabei einschließlich einer Beschichtung auf der Unterseite, 1 - 3 mm, vorzugsweise 1 - 2 mm.

Die Bestimmung der Dicke einer wegwerfbaren absorbierenden Flächenschutzmatte (inklusive einer Beschichtung) wird unter Anwendung eines spezifischen Messdrucks von 0,5 kPa auf einer Tasterfläche von 25 cm$^2$ durchgeführt. Insbesondere kann ein Dickenmessgerät DMT der Firma Schröder verwendet werden. Im Übrigen wird die Dicke in Anlehnung an DIN EN ISO 9073-2: 1995 bestimmt.

Die wegwerfbare absorbierende Flächenschutzmatte ist vorzugsweise eine Abdeckung für Flächen, wie eine Fußbodenabdeckung, eine Teppichbodenabdeckung, insbesondere eine Fußmatte, eine Schmutzfang-Abstreifmatte, eine Tierunterlage oder eine Tierplatzmatte, oder eine Abdeckung für Flächen von Mobiliar, Einrichtungs- und Ausstattungsgegenständen, wie insbesondere eine Unterlage für Haushaltswaren, wie Geschirr und /oder Gläser, ein Tischplatzset, eine Schrankboden- und Schubladenbodeneinlage, oder ein "Malervlies".

Die Merkmale können einzeln oder in Kombination für die Erfindung wesentlich sein. Weitere Merkmale und Einzelheiten sowie Vorteile der Erfindung ergeben sich aus der zeichnerischen Darstellung und der nachfolgenden Beschreibung der erfindungsgemäßen Flächenschutzmatte. Dabei zeigen:

Figur 1         schematisch eine erfindungsgemäße wegwerfbare absorbierende Flächenschutzmatte,

Figur 2         schematisch eine Schnittansicht I - I gemäß Figur 1,

Figur 3         schematisch ein Querschnitt durch eine mehrlagige erfindungsgemäße wegwerfbare absorbierende Flächenschutzmatte,

Figur 4         schematische Darstellung eines Ausschnittes einer Faserlage mit "Klebe" punkten von Bikomponentenfasern,

Figur 5          eine schematische Darstellung eines Ausschnittes der Unterseite mit einer Beschichtung,

Figur 6          schematische Darstellung eines Ausschnittes der Unterseite mit einer weiteren Beschichtung,

Figur 7          schematisch verschiedene Ausgestaltungen von Beschichtungslinien,

Figur 8          schematisch eine Darstellung eines auf der Unterseite aufgelegten imaginären Gitternetzes,

Figuren 9a - 9b          schematisch eine Darstellung der Bestimmung der Gitterquadrate eines imaginären Gitternetzes auf einer Unterseite mit einer weiteren Beschichtung,

Figur 10          eine schematische, nicht maßstabsgetreue Darstellung eines Ausschnittes eines Shore-A Härtemessgeräts,

Figuren 11a - 11b          eine schematische, nicht maßstabsgetreue Darstellung der Prüfvorrichtung für die Einsickerzeit,

Figuren 12 a - 12c          eine schematische, nicht maßstabsgetreue Aufsicht auf ein Biegesteifigkeitsgerät mit Durchführung der Messung,

Figur 12d          eine Ansicht auf den Probenhalter in Richtung der Pfeile D-D in Figur 12a, und

Figuren 13a - 13b          eine schematische Darstellung des Testaufbaus zur Bestimmung der inneren Festigkeit.

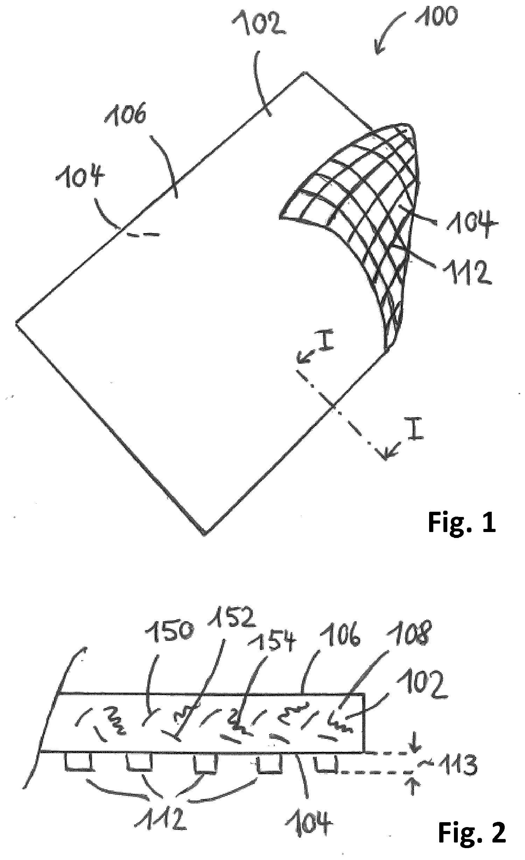

Figur 1 zeigt eine erfindungsgemäße wegwerfbare absorbierende Flächenschutzmatte 100 aus einem Vliesmaterial 102 mit einer Oberseite 106 und einer Unterseite 104, wobei die Unterseite 104 in Anwendung der Flächenschutzmatte der abzudeckenden Fläche zugewandt ist. Wie in der Figur 2 als schematische Schnittansicht I - I nach Figur 1 gezeigt ist, besteht das Vliesmaterial 102 aus einer absorbierenden Basislage 108, die ein Fasermaterial aus Stapelfasern aufweist. Die Stapelfasern enthalten dabei a.) Schmelzbindefasern, insbesondere in Form von Bi- oder Mehrkomponentenfasern, dargestellt mit dem Bezugszeichen 154, und b.) absorbierende cellulosebasierte Fasern 150 und/oder hydrophile synthetische Fasern 152. Auf der Unterseite 104 des Vliesmaterials 102 ist eine bereichsweise, nicht vollflächige Beschichtung 112 vorgesehen, wobei die Beschichtung 112 eine Höhe 113 von mindestens 0,1 mm aufweist. Die Höhe 113 der Beschichtung 112 als Erstreckung senkrecht zur Richtung der flächenhaften Erstreckung der Unterseite 104 der Flächenschutzmatte kann beispielsweise mit einem Mikroskop ermittelt werden.

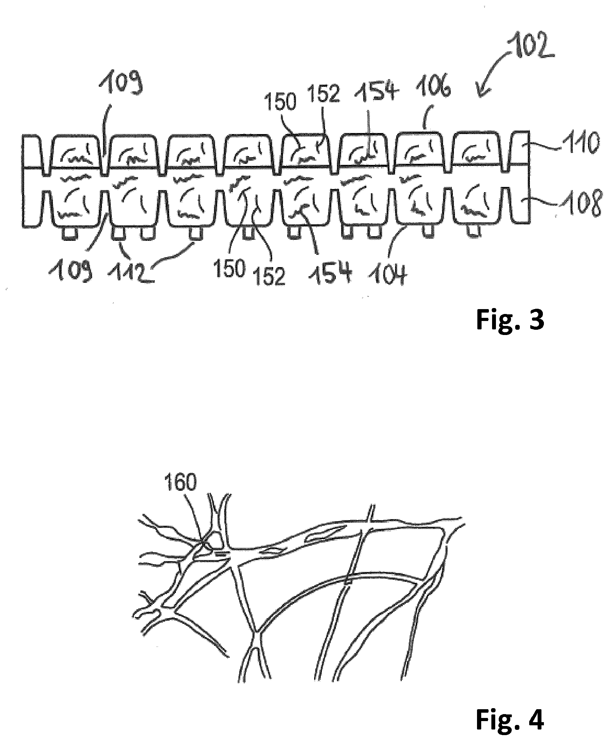

Das Vliesmaterial 102 kann in einer bevorzugten Ausführung zumindest eine weitere Vlieslage als Decklage 110 umfassen, die auf der oberen Seite der Basislage 108 angeordnet ist, wie schematisch in Figur 3 dargestellt ist. Vorzugsweise sind sowohl in der absorbierenden Basislage 108 als auch in der Decklage 110 Schmelzbindefasern 154, insbesondere als Bi- oder Mehrkomponentenfasern und absorbierende cellulosebasierte Fasern und/oder hydrophile synthetische Fasern 150, 152 enthalten.

In der Basislage 108 sind im Gesamtgewicht des Fasermaterials vorzugsweise mindestens 10 Gew-% an Schmelzbindefasern, insbesondere Bi- oder Mehrkomponentenfasern enthalten, dabei wird vorzugsweise ein Anteil von 60 Gew-% nicht überschritten. Insbesondere die Bi- oder Mehrkomponentenfasern tragen mit ihrer niedrig schmelzenden Komponente, vorzugsweise der Mantel-Komponente, zu einer punktförmigen Verbindung 160 der Fasern in den Lagen und in einer bevorzugten Ausführung mit mehreren Lagen auch zwischen den Lagen bei, wie in Figur 4 schematisch dargestellt ist.

Das Vliesmaterial 102 kann vorzugsweise, insbesondere an seiner Oberseite 106 weiter mechanisch verfestigt sein, so durch Wasserstrahlverfestigung, mechanische Vernadelung und/oder durch Glattwalzen oder durch Prägekalander.

Die bereits durch den Einsatz von Schmelzbindefasern erzeugte Bindung innerhalb des Fasermaterials kann durch weitere mechanische Verfestigungsmaßnahmen weiter vorteilhaft auch an den äußeren Sichtseiten, also Oberseite und/oder Unterseite des Vliesmaterials ergänzt werden.

Bei einer Verfestigung mit einem Prägekalander wird das Vliesmaterial zwischen einer insbesondere geheizten Kalanderwalze mit vorspringenden Prägevorsprüngen und einer Gegendruckwalze hindurchgeführt.

Vor allem bei einer Abfolge an miteinander verbundenen Lagen des Vliesmaterials, wie einer Basislage 108 und einer auf der Oberseite angeordneten Decklage 110 wird der Verbund vorzugsweise ausschließlich unter Einsatz von thermischen und mechanischen Mitteln erhalten, dabei insbesondere unter Ausschluss des Einsatzes von chemischen Zusätzen, wie Tränkung mittels flüssiger Bindemittel und/ oder Einsatz von Klebemitteln. Wie in Figur 3 schematisch dargestellt, werden bei einer bevorzugten Kalanderprägung einzelne verdichtete Bereiche 109, gebildet. Der Anteil der einzelnen verdichteten Bereiche 109 an der Gesamtfläche beträgt vorzugsweise 5-30%.

Die Ausgestaltung des Vliesmaterials mit Schmelzbindefasern trägt vorteilhaft zur inneren Festigkeit des Vliesmaterials bei, wobei das Vliesmaterial eine innere Festigkeit von vorzugsweise mindestens 5 N/25,5 cm$^2$ aufweist. Positiv wirkt sich die Zusammensetzung des Vliesmaterials mit Schmelzbindefasern auch in einer guten Abriebfestigkeit der Oberseite des Vliesmaterials aus, die sich in einer Faserfreisetzung von höchstens 10 mg nach der beschriebenen Prüfmethode zeigt.

Eine bevorzugte Ausführung einer solchen wegwerfbaren absorbierenden Flächenschutzmatte weist als Fasermaterial aus Stapelfasern in der Basislage a) mindestens 20 Gew-% absorbierende cellulosische Fasern, insbesondere Baumwolle und/oder Viskosefasern, und/oder hydrophile synthetische Fasern, insbesondere Polyesterfasern bezogen auf das Gesamtgewicht des Fasermaterials und b) -mindestens 10 Gew%, insbesondere mindestens 20 Gew-%, weiter insbesondere mindestens 30 Gew-%, weiter insbesondere mindestens 40 Gew-% an Schmelzbindefasern, insbesondere Bi-oder Mehrkomponentenfasern, insbesondere Bikomponentenfasern auf Polyesterbasis, bezogen auf das Gesamtgewicht des Fasermaterials auf.

Die Flächenschutzmatte, insbesondere davon die Basislage, zeigt vorteilhaft ein Wasseraufnahmevermögen von mindestens 2 g/g. Die Flächenschutzmatte weist eine Einsickerzeit von maximal 20 Sekunden auf.

Das Vliesmaterial weist dabei ein Flächengewicht von vorzugsweise 50-300 g/m$^2$ auf.

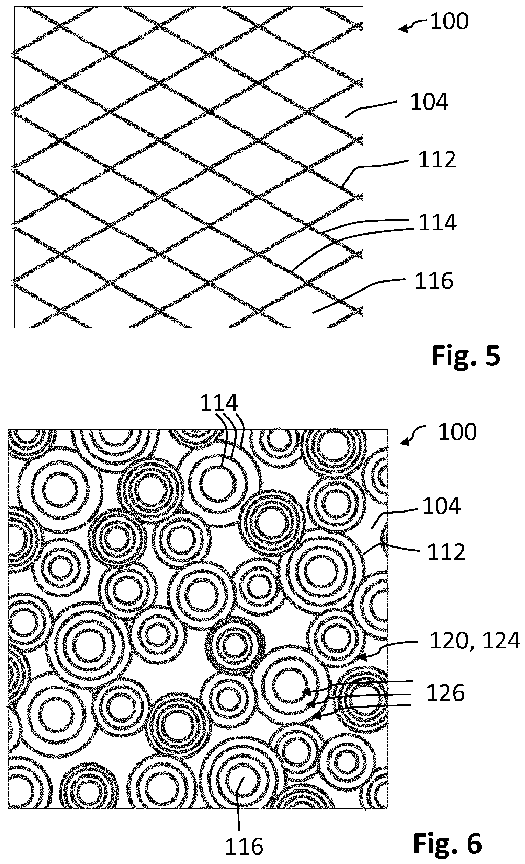

Die Beschichtung 112 auf der Unterseite kann aus punkt-, linien- und/oder flächenförmigen Beschichtungselementen oder Kombinationen hiervon bestehen. Vorzugsweise umfasst die Beschichtung 112 eine Vielzahl an Beschichtungslinien 114 oder insbesondere bevorzugt besteht die Beschichtung 112 aus einer Vielzahl an Beschichtungslinien 114. Verschiedene Ausführungen an Beschichtungslinien 114 sind dabei denkbar, wie beispielhaft in den Figuren 5, 6 und 7 gezeigt ist.

Figur 5 zeigt einen Ausschnitt einer wegwerfbaren absorbierenden Flächenschutzmatte 100, auf deren Unterseite 104 eine Beschichtung 112 aus Beschichtungslinien 114 vorgesehen ist. Die Beschichtung 112 dient dazu, zumindest bereichsweise einen Abstand zwischen dem Vliesmaterial der Flächenschutzmatte und der abzudeckenden Fläche zu generieren. Die Beschichtungslinien 114 sind polymerbasiert und bestehen vorzugsweise aus EVA (Ethylen-Vinyl-Acetat). Das Material der Beschichtung hat vorzugsweise eine Shore A-Härte von 30 - 90. Das Aufbringen der Beschichtungslinien erfolgt vorzugsweise über Tiefdruck mittels eines Gravurverfahrens, wobei das Vliesmaterial 102 zwischen einer Gravurwalze mit darin mit Beschichtungsmaterial ausgelegten Vertiefungen und einer Gegenwalze hindurchgeführt wird. Die Breite der Beschichtungslinien 114 beträgt im vorliegenden Fall vorzugsweise 0,5 - 0,7 mm. Die Höhe der Beschichtungslinien beträgt vorzugsweise 0,2 - 0,3 mm, so dass durch die Vielzahl an schmalen harten Beschichtungslinien ein guter Effekt einer Abstandshalterung erzielt wird. Im gezeigten Beispiel der Figur 5 verlaufen die Beschichtungslinien 114 kontinuierlich in einer zusammenhängenden und sich kreuzenden Anordnung unter Einschluss von unbeschichteten Bereichen 116. Es wird hierbei ein Bedeckungsgrad an Beschichtungslinien auf der Unterseite von 20 - 40% erreicht.

Die in Figur 6 gezeigte Beschichtung 112 auf der Unterseite 104 der Flächenschutzmatte 100 weist eine Vielzahl von Einzelmustern 120 auf, die durch Beschichtungslinien 114 gebildet sind. Im dargestellten Fall ist bevorzugt jedes Einzelmuster 120 durch Mustergruppen 124 gebildet, wobei die Mustergruppen hier aus mindestens 3 Musterelementen 126, hier aus konzentrisch angeordneten Kreisen, bestehen und zwischen den einzelnen Musterelementen 126 jeder einzelnen ein Einzelmuster bildenden Mustergruppe keine Beschichtungsmasse aufgetragen ist, also darin ein unbeschichteter Bereich 116 vorliegt. Auf diese Weise wird durch die Beschichtungslinien 114 in Summe ein Bedeckungsgrad auf der Unterseite von ca. 20-30% erreicht.

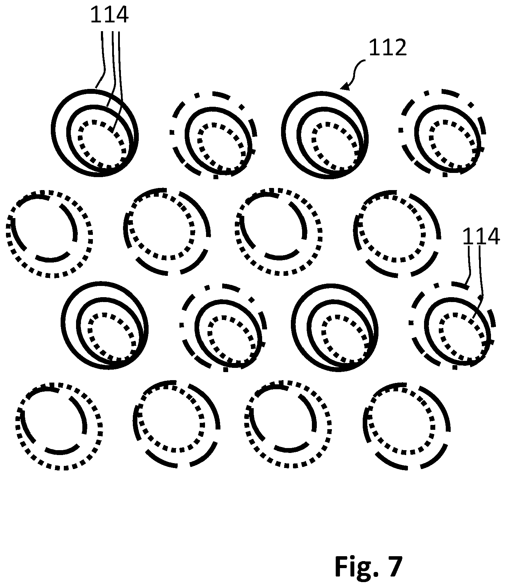

Darüber hinaus ist es auch denkbar, die Beschichtungslinien 114 nicht kontinuierlich durchgehend, sondern unterbrochen auszuführen, wie es beispielhaft in Figur 7 gezeigt ist.

Mit Bedeckungsgraden auf der Unterseite durch die Beschichtung von insbesondere höchstens 60% werden vorteilhafte Eigenschaften des Vliesmaterials der Flächenschutzmatte, wie beispielsweise Luftdurchlässigkeit und/oder Atmungsaktivität, nicht wesentlich beeinflusst.

Die Beschichtung auf der Unterseite der Flächenschutzmatte trägt vorteilhaft neben der Abstandshalterung von der abzudeckenden Fläche auch zu einer Rutschhemmung bei. Der dynamische Reibungskoeffizient der beschichteten Unterseite beträgt gemessen in Anlehnung an ASTM D 1894-01 zwischen 0,6 und 2,0.

Vorteilhaft erfasst die Beschichtung die Unterseite der Flächenschutzmatte im Wesentlichen in ihrer gesamten Erstreckung. Die Beschichtung kann in ihren Bedeckungsgraden jedoch unterschiedlich verteilt sein.

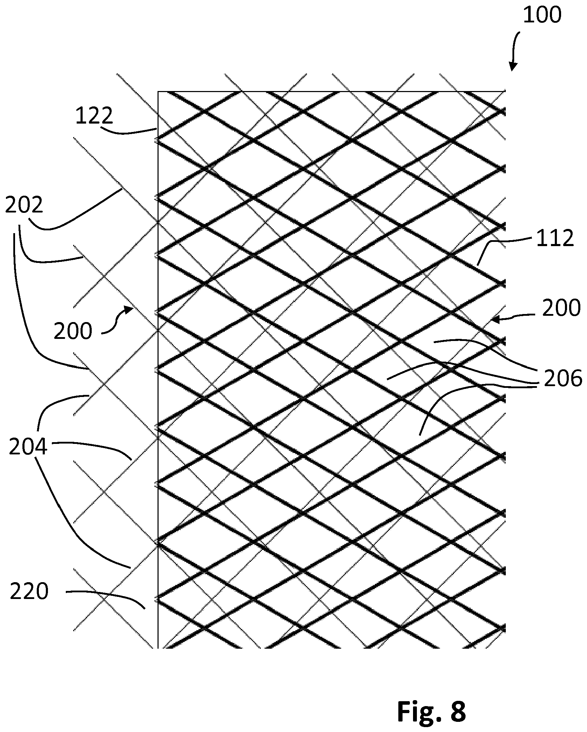

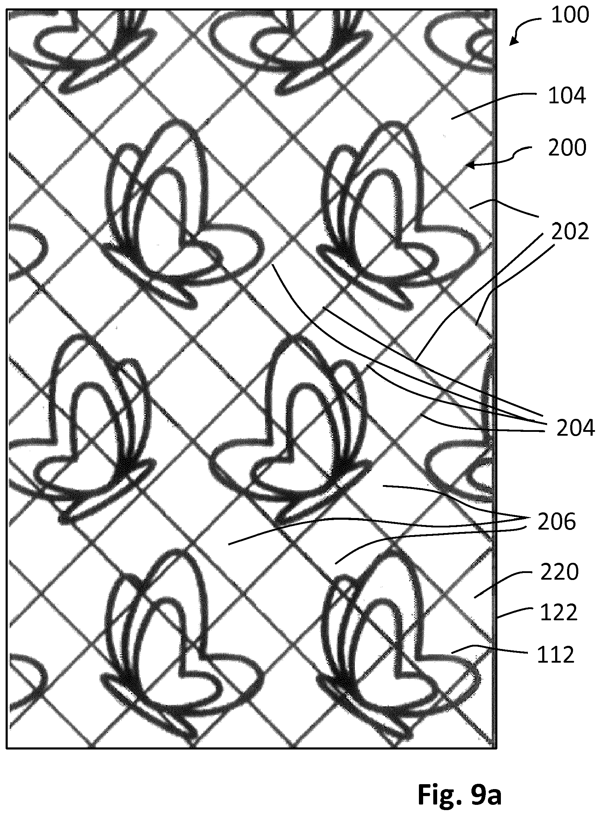

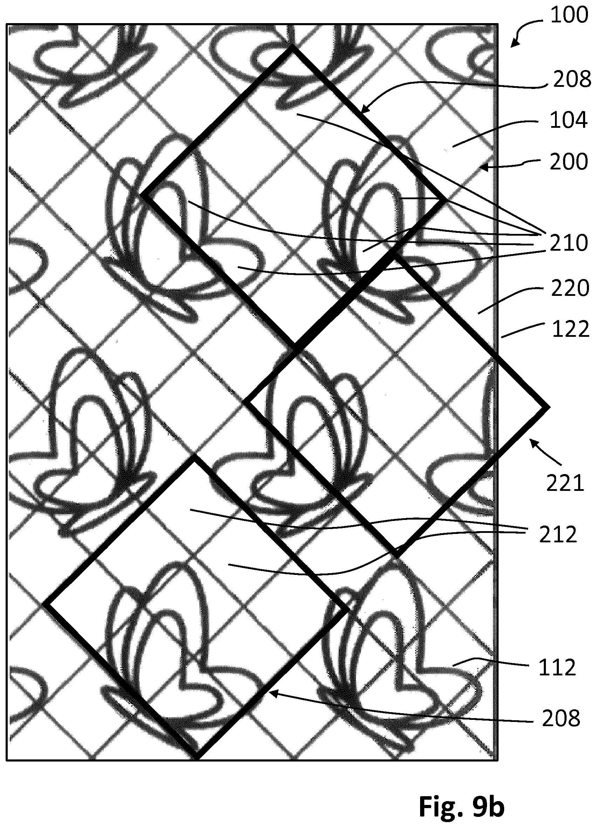

Zur Bemessung der Verteilung der Bedeckungsgrade auf der Unterseite einer wegwerfbaren absorbierenden Flächenschutzmatte wird ein imaginäres Gitternetz herangezogen. Die Bestimmung wird anhand der Figur 8 und den Figuren 9a und 9b näher erläutert:

Figur 8 zeigt beispielhaft einen Ausschnitt einer Flächenschutzmatte 100 von rechteckiger Dimension mit der Aufsicht auf die Unterseite mit einer über die gesamte Erstreckung der Unterseite verteilten Beschichtung 112, wie bereits in Figur 5 gezeigt, und ein darauf aufgelegtes imaginäres Gitternetz 200.

Das imaginäre Gitternetz 200, gebildet aus einer Anordnung an Linien, wobei eine erste Schar 202 aus parallelen, äquidistanten Linien durch eine zweite Schar 204 aus parallelen, äquidistanten Linien unter Bildung von rechten Winkeln geschnitten wird, besteht aus Gitterquadraten 206, jeweils mit einer Kantenlänge von 20 mm. Das Gitternetz 200 kann in beliebiger Weise ohne Vorzugsorientierung über eine Flächenschutzmatte 100 und deren Beschichtung 112 gelegt werden. Es werden die einzelnen Gitterquadrate 206 und der darin jeweils vorliegende Bedeckungsgrad ermittelt. Zwar ist in Figur 8 das Gitternetz 200 mit den Linienscharen in einem Winkel von 45° zur Randlinie 122 im Falle einer rechteckigen Flächenschutzmatte vorgesehen, jedoch ist für die Bemessung keine Vorzugsorientierung zum Anlegen des Gitternetzes erforderlich. Für die Auswertung des Bedeckungsgrades der Beschichtung in Bezug auf die jeweiligen Gitterquadrate können beliebige Auswerteverfahren, z.B. computerunterstützte Grafik- und Zeichenprogrammen herangezogen werden. Bei der Auswertung werden ausschließlich Gitterquadrate für die Ermittlung hergezogen, die vollständig im Bereich der Flächenschutzmatte liegen. Gitterquadrate 220, die durch die Randlinie 122 der Flächenschutzmatte 100 geschnitten werden, also Gitterquadrate 220, die sich über die Randlinien 122 der Flächenschutzmatte hinauserstrecken, bleiben für die Auswertung unberücksichtigt. Wie in Figur 8 erkennbar ist, weist die Unterseite der Flächenschutzmatte in jedem der Gitterquadrate eine Beschichtung auf. Es gibt kein Gitterquadrat 206, das beschichtungsfrei ist. Insbesondere weist jedes zur Auswertung herangezogene Gitterquadrat 206 einen Bedeckungsgrad an Beschichtung von 5-15% auf.

Alternativ kann die Beschichtung 112 auch so ausgeführt sein, dass gezielt Bereiche mit höherem Bedeckungsgrad und Bereiche mit sehr geringerem bis keinem Bedeckungsgrad an Beschichtung auf der Unterseite der absorbierenden Flächenschutzmatte vorgesehen sind.

Figur 9a zeigt beispielhaft eine weitere wegwerfbare absorbierende Flächenschutzmatte 100 von rechteckiger Dimension mit der Aufsicht auf die Unterseite 104 mit einer über die gesamte Erstreckung der Unterseite verteilten Beschichtung 112. Auch für die Bemessung einer solchen Verteilung wird das vorgenannte imaginäre Gitternetz 200 mit Gitterquadraten 206 einer Kantenlänge von 20 mm herangezogen. Die Bestimmung wird anhand der Figuren 9a und 9b näher erläutert: In Figur 9a ist das Gitternetz 200, gebildet aus einer Anordnung an Linien, wobei eine erste Schar 202 aus parallelen, äquidistanten Linien durch eine zweite Schar 204 aus parallelen, äquidistanten Linien unter Bildung von rechten Winkeln geschnitten wird, damit bestehend aus Gitterquadraten 206, und zwar jeweils mit einer Kantenlänge von 20 mm in beliebiger Weise ohne Vorzugsorientierung auf die Unterseite 104 der Flächenschutzmatte 100 aufgelegt.

Die Beschichtung 112 ist vorzugweise derart auf der Unterseite 104 angeordnet, dass bei Betrachtung jeder beliebigen quadratischen Anordnung 208 gebildet aus neun Gitterquadraten 206 des Gitternetzes 200, zumindest ein, vorzugsweise mindestens zwei, weiter vorzugsweise mindestens 3, weiter vorzugsweise mindestens 4 Gitterquadrate 210 dieser Anordnung 208 eine Beschichtung 112 aufweisen. Weiter insbesondere weist die Unterseite bei dieser Betrachtung im Bereich von höchstens 8, vorzugsweise höchstens 7, weiter vorzugsweise höchstens 6 Gitterquadraten 210 jeder beliebigen quadratischen Anordnung 208 von 9 Gitterquadraten 206 eine Beschichtung 112 auf. Bei der Auswertung werden ausschließlich Gitterquadrate 210 für die Ermittlung herangezogen, die vollständig im Bereich der Flächenschutzmatte liegen. Gitterquadrate 220, die durch die Randlinie 122 der Flächenschutzmatte 100 geschnitten werden, also Gitterquadrate 220, die sich über die Randlinien 122 der Flächenschutzmatte hinauserstrecken, bleiben für die Auswertung unberücksichtigt. In gleicher Weise wird das Verständnis zugrunde gelegt, dass ausschließlich quadratische Anordnungen 208 betrachtet werden, welche vollständig im Bereich der Flächenschutzmatte liegen. Quadratische Anordnungen 221 die durch die Randlinie 122 der Flächenschutzmatte 100 geschnitten werden, also quadratische Anordnungen, die sich über die Randlinien 122 der Flächenschutzmatte hinauserstrecken, bleiben für die Auswertung unberücksichtigt.

Die Flächenschutzmatte 100 der Figur 9b weist neben beschichteten Gitterquadraten 210 unbeschichtete Gitterquadrate 212 auf.

Auch bei einer derartigen bereichsweisen Verteilung der Beschichtung auf der Unterseite, weisen die Gitterquadrate mit Beschichtung einen Bedeckungsgrad an Beschichtung von vorzugsweise mindestens 5%, insbesondere mindestens 8%, weiter insbesondere mindestens 10%, weiter insbesondere höchstens 45%, weiter insbesondere höchstens 40%, weiter insbesondere höchstens 35% auf.

Diese Auswertung kann an jeglichen Flächenschutzmatten unabhängig von deren Dimension, wie bspw. rund, oval, eckig oder einer sonstigen Form, vorgenommen werden.

**Patentansprüche**

**1.** Wegwerfbare absorbierende Flächenschutzmatte (100) aus einem Vliesmaterial (102) mit einer Unterseite (104) und einer Oberseite (106), wobei das Vliesmaterial (102) eine absorbierende Basislage (108) umfasst und die Basislage (108) ein Fasermaterial aus Stapelfasern aufweist, **dadurch gekennzeichnet, dass** die Stapelfasern

a.) absorbierende cellulosische Fasern (150) und/oder hydrophile synthetische Fasern (152) und

b.) Schmelzbindefasern (154), insbesondere Bi-oder Mehrkomponentenfasern, umfassen

und dass die Unterseite (104) des Vliesmaterials (102) mit einer bereichsweisen, nicht vollflächigen Beschichtung (112) versehen ist, wobei die Beschichtung (112) eine Höhe (113) von mindestens 0,1 mm aufweist.

2. Wegwerfbare absorbierende Flächenschutzmatte (100) nach Anspruch 1, **dadurch gekennzeichnet, dass** die Beschichtung (112) eine Höhe (113) von mindestens 0,2 mm, weiter insbesondere von höchstens 0,8 mm, weiter insbesondere von höchstens 0,6 mm und weiter insbesondere von höchstens 0,4 mm aufweist.

3. Wegwerfbare absorbierende Flächenschutzmatte (100) nach Anspruch 1 oder 2, **dadurch gekennzeichnet, dass** die Beschichtung (112) eine Vielzahl von Beschichtungslinien (114) umfasst oder daraus besteht.

4. Wegwerfbare absorbierende Flächenschutzmatte (100) nach Anspruch 3, **dadurch gekennzeichnet, dass** die Beschichtungslinien (114) ein Verhältnis von Linienbreite zu Linienhöhe von höchstens 100, insbesondere höchstens 50, weiter insbesondere höchstens 40, weiter insbesondere höchstens 30, weiter insbesondere höchstens 20, weiter insbesondere höchstens 15 aufweisen.

5. Wegwerfbare absorbierende Flächenschutzmatte (100) nach Anspruch 3 oder 4, **dadurch gekennzeichnet, dass** die Beschichtungslinien (114) eine Linienbreite von mindestens 0,2 mm, insbesondere mindestens 0,3 mm, weiter insbesondere mindestens 0,4 mm, weiter insbesondere mindestens 0,5 mm, weiter insbesondere mindestens 0,6 mm, weiter insbesondere von höchstens 10 mm, weiter insbesondere höchstens 5 mm, weiter insbesondere höchstens 3 mm, weiter insbesondere höchstens 2,5 mm, weiter insbesondere höchstens 2,0 mm, weiter insbesondere höchstens 1,6 mm, weiter insbesondere höchstens 1,2 mm, weiter insbesondere höchstens 1,0 mm , weiter insbesondere höchstens 0,8 mm aufweisen.

6. Wegwerfbare absorbierende Flächenschutzmatte (100) nach einem der vorangehenden Ansprüche, **dadurch gekennzeichnet, dass** die Unterseite (104) einen Bedeckungsgrad durch die Beschichtung (112) von mindestens 6%, insbesondere mindestens 8%, insbesondere mindestens 10%, weiter insbesondere mindestens 20%, und weiter insbesondere von höchstens 60%, insbesondere von höchstens 50%, weiter insbesondere höchstens 40%, und weiter insbesondere höchstens 30% aufweist.

7. Wegwerfbare absorbierende Flächenschutzmatte (100) nach einem der vorangehenden Ansprüche, **dadurch gekennzeichnet, dass** die Beschichtung (112) die Unterseite (104) im Wesentlichen in ihrer gesamten Erstreckung erfasst.

8. Wegwerfbare absorbierende Flächenschutzmatte (100) nach einem der vorangehenden Ansprüche, **dadurch gekennzeichnet, dass** wenn über die Unterseite (104) der Flächenschutzmatte (100) ein imaginäres Gitternetz (200) aus parallelen, äquidistanten, senkrecht zueinander verlaufenden Linien (202, 204) mit einer Kantenlänge von 20 mm eines jeden Gitterquadrats (206) gelegt wird, die Unterseite (104) im Bereich von mindestens einem Gitterquadrat (210), insbesondere von mindestens zwei Gitterquadraten (210), insbesondere von mindestens drei Gitterquadraten (210), weiter insbesondere von mindestens vier Gitterquadraten (210) jeder beliebigen quadratischen Anordnung (208) von 9 Gitterquadraten (206) eine Beschichtung (112) aufweist.

9. Wegwerfbare absorbierende Flächenschutzmatte (100) nach einem der vorangehenden Anspruch 1 - 8, **dadurch gekennzeichnet, dass** wenn über die Unterseite (104) der Flächenschutzmatte (100) ein imaginäres Gitternetz (200) aus parallelen, äquidistanten, senkrecht zueinander verlaufenden Linien (202, 204) mit einer Kantenlänge von 20 mm eines jeden Gitterquadrats (206) gelegt wird, die Unterseite (104) im Bereich von höchstens 8 Gitterquadraten (210), weiter insbesondere von höchstens 7 Gitterquadraten (210) weiter insbesondere von höchstens 6 Gitterquadraten (210) jeder beliebigen quadratischen Anordnung (208) von 9 Gitterquadraten (206) eine Beschichtung (112) aufweist.

10. Wegwerfbare absorbierende Flächenschutzmatte (100) nach einem der vorangehenden Ansprüche 1 - 8, **dadurch gekennzeichnet, dass** wenn über die Unterseite (104) der Flächenschutzmatte (100) ein imaginäres Gitternetz (200) aus parallelen, äquidistanten, senkrecht zueinander verlaufenden Linien (202, 204) mit einer Kantenlänge von 20 mm eines jeden Gitterquadrats (206) gelegt wird, die Unterseite (104) kein Gitterquadrat (206) aufweist, das beschichtungsfrei ist.

**11.** Wegwerfbare absorbierende Flächenschutzmatte (100) nach einem der vorangehenden Anspruch 8 - 10, **dadurch gekennzeichnet, dass** die Gitterquadrate (208) mit Beschichtung (112) einen Bedeckungsgrad an Beschichtung (112) von mindestens 5%, insbesondere mindestens 8%, weiter insbesondere mindestens 10%, weiter insbesondere höchstens 45%, weiter insbesondere höchstens 40%, weiter insbesondere höchstens 35% aufweisen.

**12.** Wegwerfbare absorbierende Flächenschutzmatte (100) nach einem der vorangehenden Ansprüche, **dadurch gekennzeichnet, dass** die Beschichtung (112) ein Flächengewicht von mindestens 5 g/m$^2$, insbesondere mindestens 10 g/m2, weiter insbesondere von mindestens 15 g/m$^2$, weiter insbesondere von mindestens 20 g/m$^2$, weiter insbesondere von höchstens 50 g/m$^2$, weiter insbesondere von höchstens 40 g/m$^2$, weiter insbesondere von höchstens 30 g/m$^2$ aufweist.

**13.** Wegwerfbare absorbierende Flächenschutzmatte (100) nach einem der vorangehenden Ansprüche, **dadurch gekennzeichnet, dass** die Unterseite (104) mit der Beschichtung (112) einen dynamischen Reibungskoeffizienten in Anlehnung an ASTM D1894-01 von mindestens 0,6, insbesondere mindestens 0,8, weiter insbesondere mindestens 1,0, insbesondere von höchstens 2,0, weiter insbesondere höchstens 1,5, weiter insbesondere höchstens 1,2 aufweist.

**14.** Wegwerfbare absorbierende Flächenschutzmatte (100) nach einem der vorangehenden Ansprüche, **dadurch gekennzeichnet, dass** die Basislage (108) a.) mindestens 20 Gew-%, insbesondere mindestens 30 Gew-%, weiter insbesondere mindestens 40 Gew-%, weiter insbesondere mindestens 50 Gew-%, weiter insbesondere mindestens 60 Gew-% absorbierende cellulosische Fasern, insbesondere Baumwolle und/oder Viskosefasern, und/oder hydrophile synthetische Fasern, insbesondere Polyesterfasern bezogen auf das Gesamtgewicht des Fasermaterials der Basislage und b.) mindestens 10 Gew%, insbesondere mindestens 20 Gew-%, weiter insbesondere mindestens 30 Gew-%, weiter insbesondere mindestens 40 Gew-% Schmelzbindefasern, insbesondere Bi-oder Mehrkomponentenfasern, insbesondere Bikomponentenfasern auf Polyesterbasis, bezogen auf das Gesamtgewicht des Fasermaterials der Basislage aufweist.

**15.** Wegwerfbare absorbierende Flächenschutzmatte (100) nach einem der vorangehenden Ansprüche, **dadurch gekennzeichnet, dass** das Vliesmaterial (102), insbesondere an seiner Oberseite (106) und/oder an seiner Unterseite (104), weiter mechanisch verfestigt ist, insbesondere wasserstrahlverfestigt, mechanisch vernadelt, und/oder partiell verprägt oder vollflächig geglättet ist.

**16.** Wegwerfbare absorbierende Flächenschutzmatte (100) nach einem der vorangehenden Ansprüche, **dadurch gekennzeichnet, dass** die Flächenschutzmatte (100) eine Einsickerzeit von maximal 20 sec, insbesondere maximal 15 sec und insbesondere maximal 10 sec aufweist.

**17.** Wegwerfbare absorbierende Flächenschutzmatte (100) nach einem der vorangehenden Ansprüche, **dadurch gekennzeichnet, dass** die Flächenschutzmatte (100) insbesondere die Basislage (108) und/oder eine, zwei oder mehrere weitere Vlieslagen ein Wasserhaltevermögen von mindestens 1 g/g und höchstens 15 g/g aufweisen.

**18.** Wegwerfbare absorbierende Flächenschutzmatte (100) nach einem der vorangehenden Ansprüche, **dadurch gekennzeichnet, dass** die Oberseite (106) eine Abriebfestigkeit gemessen als Faserfreisetzung nach der beschriebenen Methode von höchstens 10 mg, insbesondere von höchstens 8 mg, weiter insbesondere von höchstens 5 mg aufweist und weiter insbesondere von höchstens 2 mg aufweist.

**19.** Wegwerfbare absorbierende Flächenschutzmatte (100) nach einem der vorangehenden Ansprüche, **dadurch gekennzeichnet, dass** die wegwerfbare absorbierende Flächenschutzmatte (100) eine Festigkeit bzw. Höchstzugkraft in Längsrichtung (Maschinenrichtung) und/oder eine Festigkeit bzw. eine Höchstzugkraft in Querrichtung (quer zur Maschinenrichtung) von mindestens 10 N/25mm, weiter insbesondere mindestens 30 N/25mm, weiter insbesondere mindestens 50 N/25 mm, weiter insbesondere mindestens 80 N/25mm, weiter insbesondere mindestens 100 N/25 mm aufweist.

## Claims

**1.** Disposable absorbent surface protection mat (100) composed of a nonwoven material (102) with a bottom side (104) and a top side (106), wherein the nonwoven material (102) comprises an absorbent base layer (108) and the base layer (108) has a fibre material composed of staple fibres,

**characterized in that**
the staple fibres comprise

> a.) absorbent cellulosic fibres (150) and/or hydrophilic synthetic fibres (152) and
> b.) hotmelt bonding fibres (154), in particular bicomponent or multicomponent fibres,

and **in that** the bottom side (104) of the nonwoven material (102) is provided with a coating (112) in certain regions but not over the full surface, wherein the coating (112) has a height (113) of at least 0.1 mm.

2. Disposable absorbent surface protection mat (100) according to Claim 1, **characterized in that** the coating (112) has a height (113) of at least 0.2 mm, more particularly of at most 0.8 mm, more particularly of at most 0.6 mm and more particularly of at most 0.4 mm.

3. Disposable absorbent surface protection mat (100) according to Claim 1 or 2, **characterized in that** the coating (112) comprises, or is composed of, a multiplicity of coating lines (114).

4. Disposable absorbent surface protection mat (100) according to Claim 3, **characterized in that** the coating lines (114) have a ratio of line width to line height of at most 100, in particular at most 50, more particularly at most 40, more particularly at most 30, more particularly at most 20, more particularly at most 15.

5. Disposable absorbent surface protection mat (100) according to Claim 3 or 4, **characterized in that** the coating lines (114) have a line width of at least 0.2 mm, in particular at least 0.3 mm, more particularly at least 0.4 mm, more particularly at least 0.5 mm, more particularly at least 0.6 mm, more particularly of at most 10 mm, more particularly at most 5 mm, more particularly at most 3 mm, more particularly at most 2.5 mm, more particularly at most 2.0 mm, more particularly at most 1.6 mm, more particularly at most 1.2 mm, more particularly at most 1.0 mm, more particularly at most 0.8 mm.

6. Disposable absorbent surface protection mat (100) according to one of the preceding claims, **characterized in that** the bottom side (104) has a degree of coverage by the coating (112) of at least 6%, in particular at least 8%, in particular at least 10%, more particularly at least 20%, and more particularly of at most 60%, in particular of at most 50%, more particularly at most 40%, and more particularly at most 30%.

7. Disposable absorbent surface protection mat (100) according to one of the preceding claims, **characterized in that** the coating (112) covers the bottom side (104) substantially over the entire extent thereof.

8. Disposable absorbent surface protection mat (100) according to one of the preceding claims, **characterized in that**, if an imaginary grid (200) of parallel, equidistant lines (202, 204) running perpendicular to one another and having an edge length of 20 mm of each grid square (206) is placed over the bottom side (104) of the surface protection mat (100), the bottom side (104) has a coating (112) in the region of at least one grid square (210), in particular of at least two grid squares (210), in particular of at least three grid squares (210), more particularly of at least four grid squares (210) of any square arrangement (208) of 9 grid squares (206).

9. Disposable absorbent surface protection mat (100) according to one of preceding Claims 1 - 8, **characterized in that**, if an imaginary grid (200) of parallel, equidistant lines (202, 204) running perpendicular to one another and having an edge length of 20 mm of each grid square (206) is placed over the bottom side (104) of the surface protection mat (100), the bottom side (104) has a coating (112) in the region of at most 8 grid squares (210), more particularly of at most 7 grid squares (210), more particularly of at most 6 grid squares (210) of any square arrangement (208) of 9 grid squares (206).

10. Disposable absorbent surface protection mat (100) according to one of preceding Claims 1 - 8, **characterized in that**, if an imaginary grid (200) of parallel, equidistant lines (202, 204) running perpendicular to one another and having an edge length of 20 mm of each grid square (206) is placed over the bottom side (104) of the surface protection mat (100), the bottom side (104) has no grid square (206) which is free of coating.

11. Disposable absorbent surface protection mat (100) according to one of preceding Claims 8 - 10, **characterized in that** the grid squares (208) with coating (112) have a degree of coverage of coating (112) of at least 5%, in particular at least 8%, more particularly at least 10%, more particularly at most 45%, more particularly at most 40%, more particularly at most 35%.

**12.** Disposable absorbent surface protection mat (100) according to one of the preceding claims, **characterized in that** the coating (112) has a basis weight of at least 5 g/m$^2$, in particular at least 10 g/m$^2$, more particularly of at least 15 g/m$^2$, more particularly of at least 20 g/m$^2$, more particularly of at most 50 g/m$^2$, more particularly of at most 40 g/m$^2$, more particularly of at most 30 g/m$^2$.

**13.** Disposable absorbent surface protection mat (100) according to one of the preceding claims, **characterized in that** the bottom side (104) with the coating (112) has a coefficient of dynamic friction in accordance with ASTM D1894-01 of at least 0.6, in particular at least 0.8, more particularly at least 1.0, in particular of at most 2.0, more particularly at most 1.5, more particularly at most 1.2.

**14.** Disposable absorbent surface protection mat (100) according to one of the preceding claims, **characterized in that** the base layer (108) has a.) at least 20% by weight, in particular at least 30% by weight, more particularly at least 40% by weight, more particularly at least 50% by weight, more particularly at least 60% by weight of absorbent cellulosic fibres, in particular cotton and/or viscose fibres, and/or hydrophilic synthetic fibres, in particular polyester fibres, based on the total weight of the fibre material of the base layer, and b.) at least 10% by weight, in particular at least 20% by weight, more particularly at least 30% by weight, more particularly at least 40% by weight of hotmelt bonding fibres, in particular bicomponent or multicomponent fibres, in particular polyester-based bicomponent fibres, based on the total weight of the fibre material of the base layer.

**15.** Disposable absorbent surface protection mat (100) according to one of the preceding claims, **characterized in that** the nonwoven material (102), in particular on its top side (106) and/or on its bottom side (104), is further mechanically consolidated, in particular is hydroentangled, mechanically needled, and/or partially embossed or smoothed over the full surface.

**16.** Disposable absorbent surface protection mat (100) according to one of the preceding claims, **characterized in that** the surface protection mat (100) has a penetration time of at most 20 seconds, in particular at most 15 seconds and in particular at most 10 seconds.

**17.** Disposable absorbent surface protection mat (100) according to one of the preceding claims, **characterized in that** the surface protection mat (100), in particular the base layer (108) and/or one, two or more further nonwoven layers, have/has a water retention capacity of at least 1 g/g and at most 15 g/g.

**18.** Disposable absorbent surface protection mat (100) according to one of the preceding claims, **characterized in that** the top side (106) has an abrasion resistance, measured as fibre release in accordance with the described method, of at most 10 mg, in particular of at most 8 mg, more particularly of at most 5 mg and more particularly of at most 2 mg.

**19.** Disposable absorbent surface protection mat (100) according to one of the preceding claims, **characterized in that** the disposable absorbent surface protection mat (100) has a strength or maximum tensile force in the longitudinal direction (machine direction) and/or a strength or a maximum tensile force in the transverse direction (transverse to the machine direction) of at least 10 N/25 mm, more particularly at least 30 N/25 mm, more particularly at least 50 N/25 mm, more particularly at least 80 N/25 mm, more particularly at least 100 N/25 mm.

**Revendications**

**1.** Tapis de protection de surface absorbant jetable (100) en un matériau non-tissé (102) muni d'un côté inférieur (104) et d'un côté supérieur (106), le matériau non-tissé (102) comprenant une couche de base absorbante (108) et la couche de base (108) comprenant un matériau fibreux en fibres discontinues,
**caractérisé en ce que**
les fibres discontinues comportent

a.) des fibres cellulosiques absorbantes (150) et/ou des fibres synthétiques hydrophiles (152) et
b.) des fibres de liaison par fusion (154), particulièrement des fibres bi- ou multicomposantes,

et **en ce que** le côté inférieur (104) du matériau non-tissé (102) est muni d'un revêtement (112) en zones, non sur toute la surface, le revêtement (112) présentant une hauteur (113) d'au moins 0,1 mm.

**2.** Tapis de protection de surface absorbant jetable (100) selon la revendication 1, **caractérisé en ce que** le revêtement (112) présente une hauteur (113) d'au moins 0,2 mm, plus particulièrement d'au plus 0,8 mm, plus particulièrement d'au plus 0,6 mm et plus particulièrement d'au plus 0,4 mm.

3. Tapis de protection de surface absorbant jetable (100) selon la revendication 1 ou 2, **caractérisé en ce que** le revêtement (112) comprend une pluralité de lignes de revêtement (114) ou en est constitué.

4. Tapis de protection de surface absorbant jetable (100) selon la revendication 3, **caractérisé en ce que** les lignes de revêtement (114) présentent un rapport entre la largeur de ligne et la hauteur de ligne d'au plus 100, particulièrement d'au plus 50, plus particulièrement d'au plus 40, plus particulièrement d'au plus 30, plus particulièrement d'au plus 20, plus particulièrement d'au plus 15.

5. Tapis de protection de surface absorbant jetable (100) selon la revendication 3 ou 4, **caractérisé en ce que** les lignes de revêtement (114) présentent une largeur de ligne d'au moins 0,2 mm, particulièrement d'au moins 0,3 mm, plus particulièrement d'au moins 0,4 mm, plus particulièrement d'au moins 0,5 mm, plus particulièrement d'au moins 0,6 mm, plus particulièrement d'au plus 10 mm, plus particulièrement d'au plus 5 mm, plus particulièrement d'au plus 3 mm, plus particulièrement d'au plus 2,5 mm, plus particulièrement d'au plus 2,0 mm, plus particulièrement d'au plus 1,6 mm, plus particulièrement d'au plus 1,2 mm, plus particulièrement d'au plus 1,0 mm, plus particulièrement d'au plus 0,8 mm.

6. Tapis de protection de surface absorbant jetable (100) selon l'une quelconque des revendications précédentes, **caractérisé en ce que** le côté inférieur (104) présente un degré de recouvrement par le revêtement (112) d'au moins 6 %, particulièrement d'au moins 8 %, particulièrement d'au moins 10 %, plus particulièrement d'au moins 20 %, et plus particulièrement d'au plus 60 %, particulièrement d'au plus 50 %, plus particulièrement d'au plus 40 %, et plus particulièrement d'au plus 30 %.

7. Tapis de protection de surface absorbant jetable (100) selon l'une quelconque des revendications précédentes, **caractérisé en ce que** le revêtement (112) englobe le côté inférieur (104) essentiellement dans son extension totale.

8. Tapis de protection de surface absorbant jetable (100) selon l'une quelconque des revendications précédentes, **caractérisé en ce que**, lorsqu'un quadrillage imaginaire (200) de lignes parallèles, équidistantes, s'étendant perpendiculairement les unes aux autres (202, 204) ayant une longueur de bord de 20 mm de chaque carré de grille (206) est posé sur le côté inférieur (104) du tapis de protection de surface (100), le côté inférieur (104) comprend un revêtement (112) dans la zone d'au moins un carré de grille (210), particulièrement d'au moins deux carrés de grille (210), particulièrement d'au moins trois carrés de grille (210), plus particulièrement d'au moins quatre carrés de grille (210), de chaque agencement carré quelconque (208) de 9 carrés de grille (206).

9. Tapis de protection de surface absorbant jetable (100) selon l'une quelconque des revendications 1 à 8 précédentes, **caractérisé en ce que**, lorsqu'un quadrillage imaginaire (200) de lignes parallèles, équidistantes, s'étendant perpendiculairement les unes aux autres (202, 204) ayant une longueur de bord de 20 mm de chaque carré de grille (206) est posé sur le côté inférieur (104) du tapis de protection de surface (100), le côté inférieur (104) comprend un revêtement (112) dans la zone d'au plus 8 carrés de grille (210), plus particulièrement d'au plus 7 carrés de grille (210), plus particulièrement d'au plus 6 carrés de grille (210), de chaque agencement carré quelconque (208) de 9 carrés de grille (206).

10. Tapis de protection de surface absorbant jetable (100) selon l'une quelconque des revendications 1 à 8 précédentes, **caractérisé en ce que**, lorsqu'un quadrillage imaginaire (200) de lignes parallèles, équidistantes, s'étendant perpendiculairement les unes aux autres (202, 204) ayant une longueur de bord de 20 mm de chaque carré de grille (206) est posé sur le côté inférieur (104) du tapis de protection de surface (100), le côté inférieur (104) ne comprend aucun carré de grille (206) qui est exempt de revêtement.

11. Tapis de protection de surface absorbant jetable (100) selon l'une quelconque des revendications 8 à 10 précédentes, **caractérisé en ce que** les carrés de grille (208) munis d'un revêtement (112) présentent un degré de recouvrement avec le revêtement (112) d'au moins 5 %, particulièrement d'au moins 8 %, plus particulièrement d'au moins 10 %, plus particulièrement d'au plus 45 %, plus particulièrement d'au plus 40 %, plus particulièrement d'au plus 35 %.

12. Tapis de protection de surface absorbant jetable (100) selon l'une quelconque des revendications précédentes, **caractérisé en ce que** le revêtement (112) présente un poids surfacique d'au moins 5 g/m$^2$, particulièrement d'au moins 10 g/m$^2$, plus particulièrement d'au moins 15 g/m$^2$, plus particulièrement d'au moins 20 g/m$^2$, plus particu-

lièrement d'au plus 50 g/m$^2$, plus particulièrement d'au plus 40 g/m$^2$, plus particulièrement d'au plus 30 g/m$^2$.

**13.** Tapis de protection de surface absorbant jetable (100) selon l'une quelconque des revendications précédentes, **caractérisé en ce que** le côté inférieur (104) muni du revêtement (112) présente un coefficient de frottement dynamique conformément à l'ASTM D1894-01 d'au moins 0,6, particulièrement d'au moins 0,8, plus particulièrement d'au moins 1,0, particulièrement d'au plus 2,0, plus particulièrement d'au plus 1,5, plus particulièrement d'au plus 1,2.

**14.** Tapis de protection de surface absorbant jetable (100) selon l'une quelconque des revendications précédentes, **caractérisé en ce que** la couche de base (108) comprend a.) au moins 20 % en poids, particulièrement au moins 30 % en poids, plus particulièrement au moins 40 % en poids, plus particulièrement au moins 50 % en poids, plus particulièrement au moins 60 % en poids, de fibres cellulosiques absorbantes, particulièrement de coton et/ou de fibres de viscose, et/ou de fibres synthétiques hydrophiles, particulièrement de fibres de polyester, par rapport au poids total du matériau fibreux de la couche de base, et b.) au moins 10 % en poids, particulièrement au moins 20 % en poids, plus particulièrement au moins 30 % en poids, plus particulièrement au moins 40 % en poids, de fibres de liaison par fusion, particulièrement de fibres bi- ou multicomposantes, particulièrement de fibres bicomposantes à base de polyester, par rapport au poids total du matériau fibreux de la couche de base.

**15.** Tapis de protection de surface absorbant jetable (100) selon l'une quelconque des revendications précédentes, **caractérisé en ce que** le matériau non-tissé (102), particulièrement sur son côté supérieur (106) et/ou sur son côté inférieur (104), est davantage consolidé mécaniquement, particulièrement consolidé par jet d'eau, aiguilleté mécaniquement, et/ou partiellement estampé ou lissé sur toute la surface.

**16.** Tapis de protection de surface absorbant jetable (100) selon l'une quelconque des revendications précédentes, **caractérisé en ce que** le tapis de protection de surface (100) présente un temps d'infiltration d'au maximum 20 s, particulièrement d'au maximum 15 s et particulièrement d'au maximum 10 s.

**17.** Tapis de protection de surface absorbant jetable (100) selon l'une quelconque des revendications précédentes, **caractérisé en ce que** le tapis de protection de surface (100), particulièrement la couche de base (108) et/ou une, deux ou davantage de couches de non-tissé supplémentaires présentent une capacité de rétention d'eau d'au moins 1 g/g et d'au plus 15 g/g.

**18.** Tapis de protection de surface absorbant jetable (100) selon l'une quelconque des revendications précédentes, **caractérisé en ce que** le côté supérieur (106) présente une résistance à l'abrasion, mesurée en tant que libération de fibres selon la méthode décrite, d'au plus 10 mg, particulièrement d'au plus 8 mg, plus particulièrement d'au plus 5 mg et plus particulièrement d'au plus 2 mg.

**19.** Tapis de protection de surface absorbant jetable (100) selon l'une quelconque des revendications précédentes, **caractérisé en ce que** le tapis de protection de surface absorbant jetable (100) présente une solidité ou force de traction maximale dans la direction longitudinale (sens machine) et/ou une solidité ou force de traction maximale dans la direction transversale (perpendiculairement au sens machine) d'au moins 10 N/25 mm, plus particulièrement d'au moins 30 N/25 mm, plus particulièrement d'au moins 50 N/25 mm, plus particulièrement d'au moins 80 N/25 mm, plus particulièrement d'au moins 100 N/25 mm.

**Fig. 1**

**Fig. 2**

**Fig. 3**

**Fig. 4**

100

104

112

114

116

**Fig. 5**

114

100

104

112

120, 124

126

116

**Fig. 6**

Fig. 7

Fig. 8

100
104
200
202
204
206
220
122
112

**Fig. 9a**

**Fig. 9b**

**Fig. 10**

$D_1$

$D_2$

300

306

302

$h_3$

308

$h_2$

$h_1$

**Fig. 11a**

310

302

304

308

L

L

**Fig. 11b**

**Fig. 12a**

0,0 mN

**Fig. 12b**

**Fig. 12c**

**Fig. 12d**

Fig. 13a

Fig. 13b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7501364 B
- DE 202004007129 U1
- US 4609580 A
- US 5834104 A